# EUROPEAN PATENT SPECIFICATION

(11) **EP 2 554 464 B1**
(45) Date of publication and mention of the grant of the patent: **26.03.2014**
(21) Application number: 12166916.2
(22) Date of filing: 07.05.2012
(51) Int. Cl.: B62K 11/10, B62J 17/02

(54) **Motorcycle**
Motorrad
Motocyclette

(30) Priority: 03.08.2011 JP 2011170381
(43) Date of publication of application: 06.02.2013
(73) Proprietor: Yamaha Hatsudoki Kabushiki Kaisha, Iwata-shi, Shizuoka 438-8501 (JP)
(72) Inventor: Maruo, Takuya, Iwata-shi, Shizuoka 438-8501 (JP)
(74) Representative: Grünecker, Kinkeldey, Stockmair & Schwanhäusser

(56) References cited:
- EP-A1- 0 463 942
- EP-A1- 1 205 379
- EP-A2- 1 584 550
- US-A1- 2007 249 220

## Description

The present invention relates to a motorcycle according to the preamble of independent claim 1. Such a motorcycle can be taken from the prior art document US 2007/0249220A1.

Some motorcycles include a handle cover and a front cover. The handle cover covers a handle unit, while the front cover covers the front side of a vehicle body frame including a head pipe portion. In this type of well-known motorcycles, a head light has been disposed not in the handle cover but in the front cover. For example, Publication of Japan Patent No. 3476049 describes a large head lamp disposed in the front cover. It is easier to reliably produce a large inner space in the front cover than in the handle cover. Therefore, a head light can be produced in a larger size when designed to be disposed in the front cover than when designed to be disposed in the handle cover.

Demands have been made that the motorcycles are preferably equipped with large-diameter wheels. On the other hand, demands have been also made that the vehicle height of the motorcycles is preferably reduced to be as low as possible. It is required to reduce the vertical length of a portion of the vehicle positioned over the wheels in order to reduce the vehicle height to be as low as possible even when the vehicle is equipped with large-diameter wheels. As described, however, a large space is necessary in the inside of the front cover when a large head light is disposed in the front cover. It is thus difficult to reduce the vertical length of the front cover. In view of the above, locating the top end of the front cover at a higher position can be assumed for reducing the vehicle height to be as low as possible, and simultaneously, reliably producing a large space in the inside of the front cover in a motorcycle equipped with large-diameter wheels. However, vertical distance is reduced between the top end of the front cover and the handle cover when the vehicle height is reduced to be as low as possible while the top end of the front cover is located at a higher position.

Incidentally, it is required to detach the handle cover from the vehicle when maintenance is executed for the inside of the handle cover. For example, the motorcycle described in Publication of Japan Patent No. 3476049 includes a handle cover formed by members divided back and forth. Specifically, the handle cover is formed by a front handle cover and a rear handle cover. In executing maintenance for a motorcycle of this type, it is required to detach the front handle cover from the vehicle. The front handle cover herein easily makes contact with the front cover when the vertical distance is short between the top end of the front cover and the handle cover. Therefore, it is not easy to detach the front handle cover from the vehicle in executing maintenance.

It is an object of the present invention to provide a motorcycle that is equipped with a large-diameter wheel and a large head light and implements superior maintenance for the inside of a handle cover.

According to the present invention said object is solved by a motorcycle having the features of independent claim 1. Preferred embodiments are laid down in the dependent claims. Thus, a motorcycle according to a first aspect of the present invention includes a head pipe portion, a steering shaft, a handle unit, a handle cover portion, a wire portion, a front fork, a front wheel, an upper front cover, a head light portion and a lower front cover. The head pipe portion is positioned transversely in the middle of a vehicle. The steering shaft is inserted into the head pipe portion. The handle unit is coupled to the steering shaft. The handle unit includes a pair of right and left grip portions and a coupling portion. The right and left grip portions are gripped by a rider. The coupling portion couples the right and left grip portions. The handle cover portion includes an upper handle cover and a lower handle cover. The upper handle cover is disposed over the coupling portion. The lower handle cover is formed separately from the upper handle cover. The lower handle cover is disposed under the coupling portion and the upper handle cover. The wire portion is covered with the handle cover portion. The front fork is coupled to a bottom portion of the steering shaft. The front wheel is supported by a bottom portion of the front fork. The upper front cover is disposed forwards of the head pipe portion. The upper front cover is disposed over the front wheel. The head light portion is disposed in the upper front cover. The lower front cover is positioned under the upper front cover. The lower front cover is coupled to the upper front cover. The lower front cover is disposed rearwards of the front wheel. Further, a vertical length of the lower front cover is greater than a vertical length of the upper front cover. The lower handle cover includes a lower handle cover middle portion and lower handle cover lateral portions. The steering shaft is inserted in the lower handle cover middle portion. The lower handle cover lateral portions are extended transversely outwards from positions higher than a bottom end of the lower handle cover middle portion. The lower handle cover middle portion includes a bottom edge disposed lower than a top end of the upper front cover in a vehicle side view. The wire portion is downwardly extended through the lower handle cover middle portion. The lower handle cover middle portion includes an opening in a front portion thereof, or alternatively, a vertical length of the front portion of the lower handle cover middle portion is less than a vertical length of a transversely middle portion of the upper handle cover.

A motorcycle according to a second aspect of the present invention relates to the motorcycle according to the first aspect of the present invention. In the motorcycle, the lower handle cover middle portion includes an opening in the front portion thereof. The opening is ranged from a top edge of the front portion of the lower handle cover middle portion to a bottom edge of the lower handle cover middle portion.

A motorcycle according to a third aspect of the present invention relates to the motorcycle according to the second aspect of the present invention. In the motorcycle, the wire portion is disposed while passing in front of the steering shaft.

A motorcycle according to a fourth aspect of the present invention relates to the motorcycle according to the first aspect of the present invention. In the motorcycle, the lower handle cover middle portion includes an opening in the front portion thereof. The handle cover portion further includes a middle handle cover. The middle handle cover covers the opening of the lower handle cover.

A motorcycle according to a fifth aspect of the present invention relates to the motorcycle according to the fourth aspect of the present invention. In the motorcycle, the middle handle cover covers the transversely middle portion of the upper handle cover as well as the opening of the lower handle cover.

A motorcycle according to a sixth aspect of the present invention relates to the motorcycle according to the first aspect of the present invention. In the motorcycle, the wire portion includes a throttle wire. The throttle wire is connected to either of the right and left grip portions.

A motorcycle according to a seventh aspect of the present invention relates to the motorcycle according to the sixth aspect of the present invention. In the motorcycle, the throttle wire is at least partially positioned higher than the lower handle cover.

A motorcycle according to an eighth aspect of the present invention relates to the motorcycle according to the first aspect of the present invention. The motorcycle further includes a meter unit. The meter unit is configured to display vehicle-related information. The meter unit is fixed to the handle unit.

A motorcycle according to a ninth aspect of the present invention relates to the motorcycle according to the eighth aspect of the present invention. The motorcycle further includes a storage portion. The storage portion is at least partially disposed within the handle cover portion. The storage portion is fixed to the meter unit.

A motorcycle according to a tenth aspect of the present invention relates to the motorcycle according to the first aspect of the present invention. In the motorcycle, the head light portion includes a pair of right and left head light units. Each of the right and left head light units has a shape slanted upwards and transversely outwards in a vehicle front view.

A motorcycle according to an eleventh aspect of the present invention relates to the motorcycle according to the first aspect of the present invention. In the motorcycle, each of the lower handle cover lateral portions includes a top end positioned higher than the coupling portion of the handle unit.

A motorcycle according to a twelfth aspect of the present invention relates to the motorcycle according to the first aspect of the present invention. The motorcycle further includes an operating switch. The operating switch is disposed in a rear portion of the handle cover portion. The handle cover portion further includes a switch cover. The switch cover covers a surrounding of the operating switch. The switch cover is formed separately from the upper handle cover and the lower handle cover.

A motorcycle according to a thirteenth aspect of the present invention relates to the motorcycle according to the first aspect of the present invention. In the motorcycle, the top end of the upper front cover is positioned higher than a bottom end of each lower handle cover lateral portion in a vehicle front view.

A motorcycle according to a fourteenth aspect of the present invention relates to the motorcycle according to the first aspect of the present invention. In the motorcycle, a boundary between the upper handle cover and the lower handle cover does not continue to the bottom edge of the lower handle cover middle portion.

A motorcycle according to a fifteenth aspect of the present invention relates to the motorcycle according to the first aspect of the present invention. In the motorcycle, the lower handle cover middle portion includes an opening in a rear portion thereof. The opening of the rear portion of the lower handle cover middle portion is ranged from a top edge to a bottom edge in the rear portion of the lower handle cover middle portion.

A motorcycle according to a sixteenth aspect of the present invention relates to the motorcycle according to the fifteenth aspect of the present invention. In the motorcycle, the handle cover portion further includes a rear handle cover for covering the opening of the rear portion of the lower handle cover middle portion.

### <Advantageous Effects of Invention>

According to the motorcycle of the first aspect of the present invention, the vertical length of the lower front cover is greater than that of the upper front cover. Therefore, the motorcycle can be equipped with a large-diameter wheel. Further, the bottom edge of the lower handle cover middle portion is disposed lower than the top end of the upper front cover in a vehicle side view. Therefore, a large space can be reliably produced within the upper front cover while increase in the vehicle height can be inhibited. Accordingly, the head light portion to be disposed in the upper front cover can be formed in a large size. Yet further, the handle cover portion includes the upper handle cover and the lower handle cover. Therefore, the upper handle cover can be easily detached from the vehicle body while the lower handle cover remains attached thereto in executing a maintenance work even when small vertical distance is produced between the top end of the upper front cover and the lower handle cover. In other words, maintenance performance can be enhanced for the inside of the handle cover. Moreover, the lower handle cover middle portion includes the opening in the front portion thereof. Alternatively, the vertical length of the front portion of the lower handle cover middle portion is less than that of the transversely middle portion of the upper handle cover. This enhances accessibility from the front side to the inside of the lower handle cover remaining attached to the vehicle body. In other words, maintenance performance can be enhanced for the wire portion disposed within the handle cover portion. Put the above together, the present invention can provide a motorcycle that is equipped with a large-diameter wheel and a large head light and implements superior maintenance for the inside of the handle cover portion.

According to the motorcycle of the second aspect of the present invention, the lower handle cover can be detached from the handle unit through the opening. Therefore, the lower handle cover can be easily detached from the vehicle body without detaching the handle unit from the steering shaft.

According to the motorcycle of the third aspect of the present invention, the wire portion can be easily accessed through the opening. Therefore, maintenance performance can be enhanced for the wire portion.

According to the motorcycle of the fourth aspect of the present invention, the opening of the lower handle cover is covered with the middle handle cover. Therefore, the inside of the handle cover portion can be protected.

According to the motorcycle of the fifth aspect of the present invention, the middle handle cover covers the transversely middle portion of the upper handle cover as well as the opening of the lower handle cover. Therefore, a visual aspect of the handle cover portion can be enhanced. Further, the middle handle cover can protect the upper handle cover.

According to the motorcycle of the sixth aspect of the present invention, the throttle wire is covered with the handle cover portion. Therefore, distance can be reduced between the upper front cover and the handle cover portion compared to the structure that the throttle wire is disposed between the handle cover portion and the upper front cover. In other words, the top end of the upper front cover can be disposed in a higher position. Accordingly, a larger space can be reliably produced in the inside of the upper front cover.

According to the motorcycle of the seventh aspect of the present invention, the throttle wire is at least partially positioned higher than the lower handle cover. Therefore, distance can be further reduced between the upper front cover and the handle cover portion compared to the structure that the throttle wire is disposed between the handle cover portion and the upper front cover. In other words, the top end of the upper front cover can be disposed in a higher position. Accordingly, a larger space can be reliably produced in the inside of the upper front cover. In addition, the throttle wire can be easily accessed from the top side. Therefore, maintenance performance can be enhanced for the throttle wire.

According to the motorcycle of the eighth aspect of the present invention, the meter unit is fixed to the handle unit. Therefore, the upper handle cover can be easily detached from the vehicle body without detaching the meter unit therefrom.

According to the motorcycle of the ninth aspect of the present invention, the storage portion is fixed to the meter unit. Therefore, either the upper handle cover or the lower handle cover can be compactly formed compared to the structure that the storage portion is attached to either the upper handle cover or the lower handle cover.

According to the motorcycle of the tenth aspect of the present invention, each of the right and left head light units has a shape slanted upwards and transversely outwards in a vehicle front view. A large space is herein reliably produced in the inside of the upper front cover. Therefore, flexibility in arrangement can be enhanced even for the head light units requiring such a large space due to the shape thereof.

According to the motorcycle of the eleventh aspect of the present invention, the top end of each lower handle cover lateral portion is positioned higher than the coupling portion of the handle unit. Therefore, it is possible to increase the depth of the inner space of each lower handle cover lateral portion. Accordingly, storage performance can be enhanced for the lower handle cover.

According to the motorcycle of the twelfth aspect of the present invention, the switch cover is formed separately from the upper handle cover and the lower handle cover. Therefore, the switch cover can be easily shaped in molds.

According to the motorcycle of the thirteenth aspect of the present invention, the top end of the upper front cover is positioned higher than the bottom end of the lower handle cover lateral portions. Therefore, a larger space can be reliably produced in the inside of the upper front cover.

According to the motorcycle of the fourteenth aspect of the present invention, the boundary between the upper handle cover and the lower handle cover does not continue to the bottom edge of the handle cover middle portion. Therefore, the upper handle cover can be easily detached from the vehicle body while the lower handle cover remains attached thereto in executing a maintenance work. Accordingly, maintenance performance can be enhanced for the inside of handle cover portion.

According to the motorcycle of the fifteenth aspect of the present invention, the lower handle cover can be detached from the handle unit through the opening formed in the rear portion of the lower handle cover middle portion. Therefore, the lower handle cover can be easily detached from the vehicle body without detaching the handle unit from the steering shaft.

According to the motorcycle of the sixteenth aspect of the present invention, the opening of the rear portion of the lower handle cover middle portion can be covered with and protected by the rear handle cover.

### BRIEF DESCRIPTION OF THE DRAWINGS

Referring now to the attached drawings which form a portion of this original disclosure:
FIG. 1 is a side view of a motorcycle according to an exemplary embodiment of the present invention;
FIG. 2 is a front view of the motorcycle;
FIG 3 is a side view of a front portion of the motorcycle;
FIG. 4 is an exploded perspective view of a handle unit and a handle cover portion;
FIG. 5 is a top view of the handle cover portion;
FIG 6 is a front view of the handle cover portion that a middle handle cover is detached therefrom;
FIG 7 is a rear view of the handle cover portion;
FIG. 8 is an exploded perspective view of a meter unit and a frame portion;
FIG. 9 is a cross-sectional view of FIG 7 sectioned along a line XI-XI;
FIG. 10 is a left side view of a left switch cover;
FIG. 11 is a top view of internal devices disposed within the handle cover portion;
FIG. 12 is a front view of the internal devices disposed within the handle cover portion;
FIG. 13 is a front view of the handle cover portion of a motorcycle according to one of the other exemplary embodiments;
FIG. 14 is a front view of a handle cover portion of a motorcycle according to one of the other exemplary embodiments;
FIG. 15 is a front view of a handle cover portion of a motorcycle according to one of the other exemplary embodiments;
FIG. 16 is a front view of a handle cover portion of a motorcycle according to one of the other exemplary embodiments;
FIG 17 is a cross-sectional view of FIG 16 sectioned along a line XVII-XVII; and
FIG. 18 is a rear view of the handle cover portion of the motorcycle illustrated in FIG. 16.

### DETAILED DESCRIPTION OF THE EMBODIMENTS

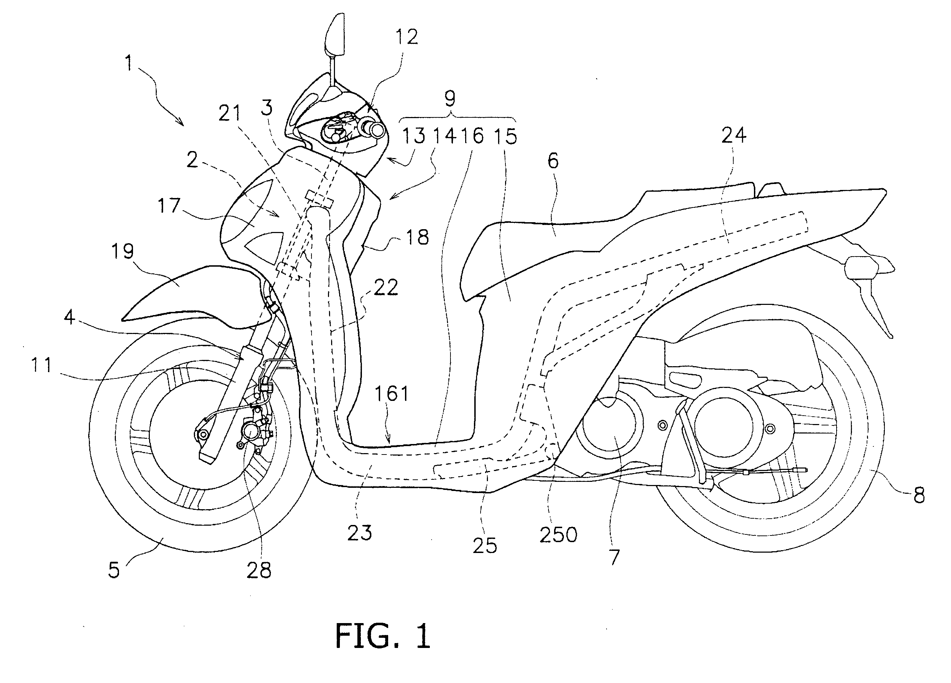

A vehicle embodied as a motorcycle according to an exemplary embodiment of the present invention will be hereinafter explained with reference to figures. FIG 1 is a side view of a motorcycle 1 according to the exemplary embodiment of the present invention. The motorcycle 1 is a scooter-type motorcycle. The motorcycle 1 includes a vehicle body frame 2, a steering shaft 3, a front fork 4, a front wheel 5, a seat 6, an engine unit 7, a rear wheel 8 and a vehicle body cover 9. It should be noted in the following explanation that the longitudinal (back-and-forth) direction refers to that of a vehicle body seen from a rider seated on the seat 6. Further, the transverse (width or right-and-left) direction refers to that of the vehicle body seen from a rider seated on the seat 6. In the present exemplary embodiment, a phrase "transversely outwards" and its related phrases refer to a direction away from an axis longitudinally extended through the transverse center of the vehicle.

The vehicle body frame 2 is mostly formed by iron pipes. The vehicle body frame 2 includes a head pipe portion 21, a down frame portion 22, an under frame portion 23 and a rear frame portion 24. The head pipe portion 21 is positioned in the transverse middle of the vehicle. The steering shaft 3 is rotatably inserted into the head pipe portion 21. A handle unit 12 is coupled to the top of the steering shaft 3. The handle unit 12 will be described below. The front fork 4, configured to be extended and contracted, is coupled to the bottom of the steering shaft 3. The front fork 4 includes a suspension device 11. The front wheel 5 is rotatably supported by the bottom portion of the suspension device 11. A brake device 28 is attached to the front wheel 5.

The down frame portion 22 is connected to the head pipe portion 21. The down frame portion 22 is downwardly extended from the head pipe portion 21. The under frame portion 23 is connected to the bottom end of the down frame portion 22. The under frame portion 23 is backwardly extended from the down frame portion 22. The rear frame portion 24 is connected to the rear end of the under frame portion 23. The rear frame portion 24 is backwardly and upwardly extended from the rear end of the under frame portion 23. A bracket 25 is attached to the under frame portion 23 and the rear frame portion 24. A pivot shaft 250, extended in the transverse direction of the vehicle, is attached to the bracket 25. The engine unit 7 is pivotably attached onto the pivot shaft 250. The engine unit 7 includes an output shaft (not illustrated in the figures). The rear wheel 8 is rotatably supported by the output shaft of the engine unit 7. The seat 6 is disposed over the rear frame portion 24. The seat 6 is positioned rearwards of the head pipe portion 21. The seat 6 is supported by the vehicle body frame 2. Specifically, the seat 6 is attached to the rear frame portion 24.

The vehicle body cover 9 includes a handle cover portion 13, a front vehicle body cover portion 14, a rear vehicle body cover portion 15 and an under cover portion 16. The handle cover portion 13 covers the handle unit 12. The handle cover portion 13 will be explained below in detail. The front vehicle body cover portion 14 covers the surrounding of the head pipe portion 21 and the down frame portion 22. The front vehicle body cover portion 14 includes a front face cover portion 17 and a rear face cover portion 18. The front face cover portion 17 covers the front side of the head pipe portion 21 and the down frame portion 22. The rear face cover portion 18 covers the back side of the head pipe portion 21 and the down frame portion 22.

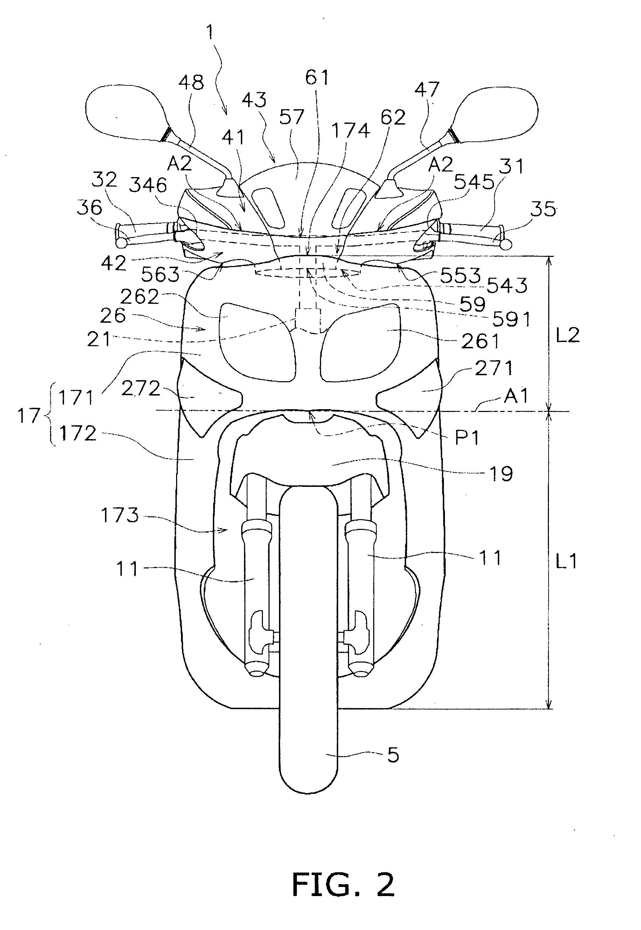

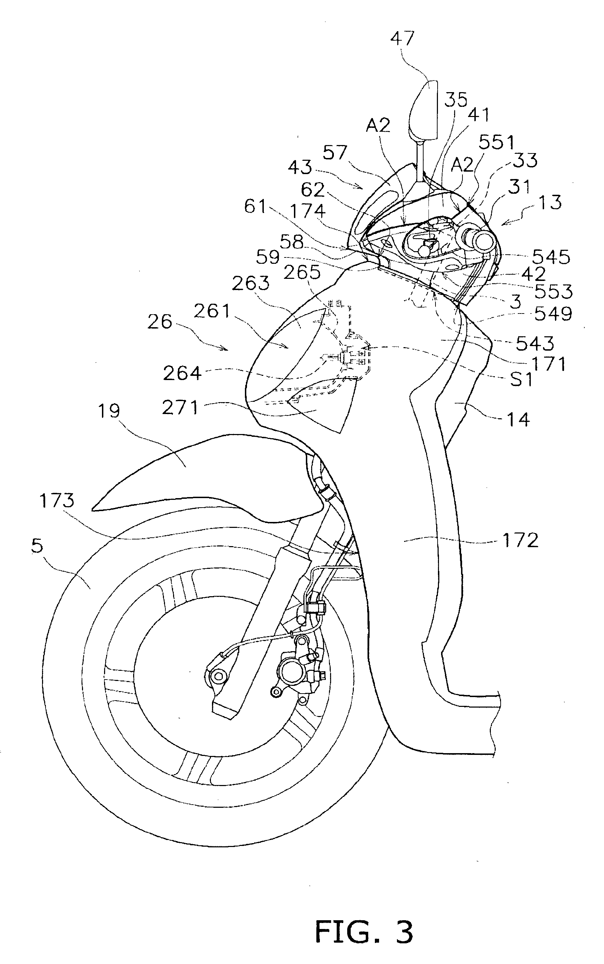

FIG. 2 is a front view of the motorcycle 1. FIG. 3 is an enlarged view of the front portion of the motorcycle 1. As illustrated in FIG 2, the front face cover portion 17 includes an upper front cover 171 and a lower front cover 172. As illustrated in FIG 3, the front face cover portion 17 includes a recess 173 backwardly recessed in a side view of the vehicle. The rear portion of the front wheel 5 is disposed in the recess 173. As illustrated in FIG. 2, the upper front cover 171 is positioned higher than a top end P1 of the recess 173 in a front view of the vehicle. The lower front cover 172 is positioned lower than the top end P1 of the recess 173 in a front view of the vehicle. In other words, the upper front cover 171 is a portion of the front face cover portion 17, which is positioned higher than a conceptual line A1 in a front view of the vehicle as illustrated in FIG. 2. The lower front cover 172 is a portion of the front face cover portion 17, which is positioned lower than the conceptual line A1 in a front view of the vehicle. The conceptual line A1 is a horizontal line passing through the top end P1 of the recess 173 in a front view of the vehicle. As illustrated in FIG. 2, a vertical length L1 of the lower front cover 172 is greater than a vertical length L2 of the upper front cover 171.

The upper front cover 171 is disposed forwards of the head pipe portion 21. The upper front cover 171 is disposed over the front wheel 5. A head light portion 26 is disposed in the upper front cover 171. The head light portion 26 includes a left head light unit 261 and a right head light unit 262. The left and right head light units 261 and 262 are disposed transversely away from each other. In a front view of the vehicle, each of the left and right head light units 261 and 262 has a shape slanted upwards and transversely outwards. Specifically, the left head light unit 261 has a shape slanted leftwards and upwards. The right head light unit 262 has a shape slanted rightwards and upwards.

As illustrated in FIG. 3, the left head light unit 261 includes a lens portion 263, a head light bulb 264 and a reflection portion 265. The lens portion 263 is formed by a light-transmissive member. The head light bulb 264 is attached to the reflection portion 265. The reflection portion 265 forwardly reflects light from the head light bulb 264. The right head light unit 262 has the same structure as the left head light unit 261. The upper front cover 171 includes an accommodation space S1 in the inside thereof for accommodating the left and right head light units 261 and 262.

As illustrated in FIG. 2, a left flasher light 271 and a right flasher light 272 are further attached to the front face cover portion 17. The left and right flasher lights 271 and 272 are disposed transversely away from each other. The left and right flasher lights 271 and 272 are at least partially disposed in the inside of the upper front cover 171. As illustrated in FIG 3, the left and right flasher lights 271 and 272 are partially overlapped with the accommodation space S1 for the left and right head light units 261 and 262 in a side view of the vehicle.

The lower front cover 172 is connected to the upper front cover 171. The lower front cover 172 is positioned lower than the upper front cover 171. The lower front cover 172 is disposed rearwards of the front wheel 5. The lower front cover 172 is disposed between the front wheel 5 and the down frame portion 22 (see FIG 1). It should be noted that a front fender 19 is disposed over the front wheel 5. The front fender 19 is positioned lower than the upper front cover 171. It should be also noted that the upper and lower front covers 171 and 172 may be either integrally or separately formed. Further, each of the upper and lower front covers 171 and 172 may be formed by a plurality of cover members.

As illustrated in FIG 1, the rear vehicle body cover portion 15 is positioned under the seat 6. The rear vehicle body cover portion 15 covers the front side and the both lateral sides of the rear frame portion 24 disposed under the seat 6. The under cover portion 16 is positioned between the front vehicle body cover portion 14 and the rear vehicle body cover portion 15. The under cover portion 16 couples the front vehicle body cover portion 14 and the rear vehicle body cover portion 15. The under cover portion 16 includes a flat footboard 161. The flat footboard 161 is positioned longitudinally between the front wheel 5 and the seat 6. The flat footboard 161 is positioned lower than the seat 6. The flat footboard 161 is a surface on which a rider seated on the seat 6 puts his/her feet during travelling of the vehicle. The flat footboard 161 is positioned over the under frame portion 23. The flat footboard 161 is positioned longitudinally between the down frame portion 22 and the rear frame portion 24. The flat footboard 161 has an entirely flat shape in the transverse direction.

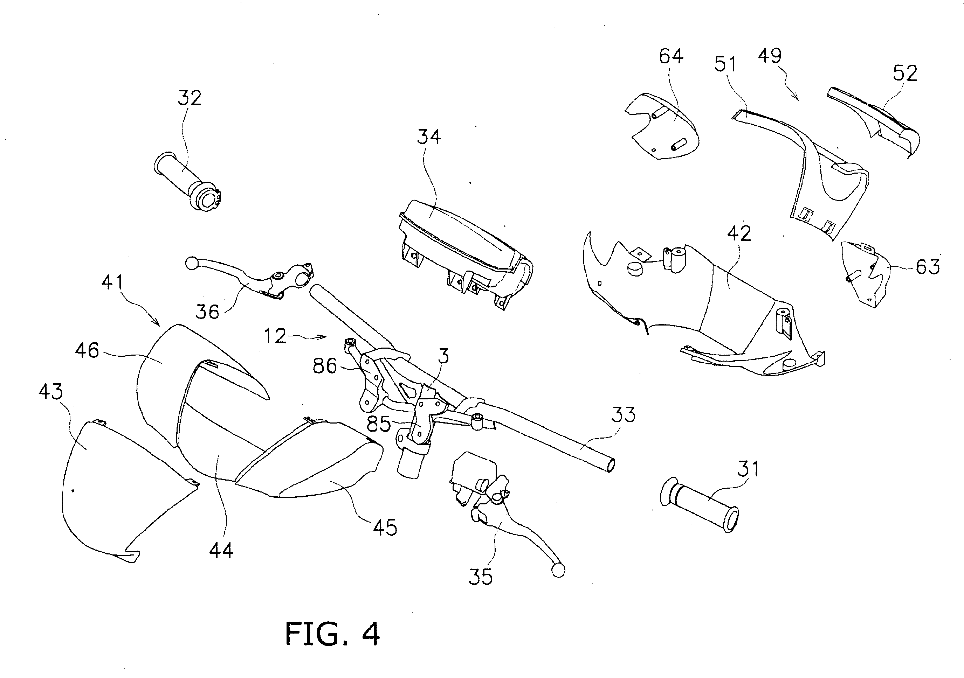

FIG 4 is an exploded perspective view illustrating elements of the handle unit 12 and the handle cover portion 13. It should be noted that FIG 4 simply expresses a portion of the elements for ease of illustration. As illustrated in FIG 4, the handle unit 12 includes a left grip portion 31, a right grip portion 32 and a coupling portion 33. The left and right grip portions 31 and 32 are gripped by a rider. The coupling portion 33 is coupled to the top of the steering shaft 3. The left grip portion 31 is attached to the left end of the coupling portion 33, while the right grip portion 32 is attached to the right end of the coupling portion 33. The coupling portion 33 couples the left and right grip portions 31 and 32. A meter unit 34 is fixed to the handle unit 12. The meter unit 34 is configured to display the vehicle-related information including the vehicle speed, the travel distance, the remaining amount of fuel and etc. The meter unit 34 is fixed to the transversely middle portion of the coupling portion 33. Further, a left brake bar 35 and a right brake bar 36 are attached to the coupling portion 33.

As illustrated in FIGS. 2 to 4, the handle cover portion 13 includes an upper handle cover 41, a lower handle cover 42 and a middle handle cover 43. The upper handle cover 41 is disposed over the aforementioned coupling portion 33. The upper handle cover 41 covers the coupling portion 33 from the top side. The lower handle cover 42 is formed separately from the upper handle cover 41. The lower handle cover 42 is positioned under the coupling portion 33 and the upper handle cover 41. The lower handle cover 42 covers the coupling portion 33 from the bottom side. The middle handle cover 43 is attached to the upper handle cover 41. The middle handle cover 43 covers the upper handle cover 41 from the top side.

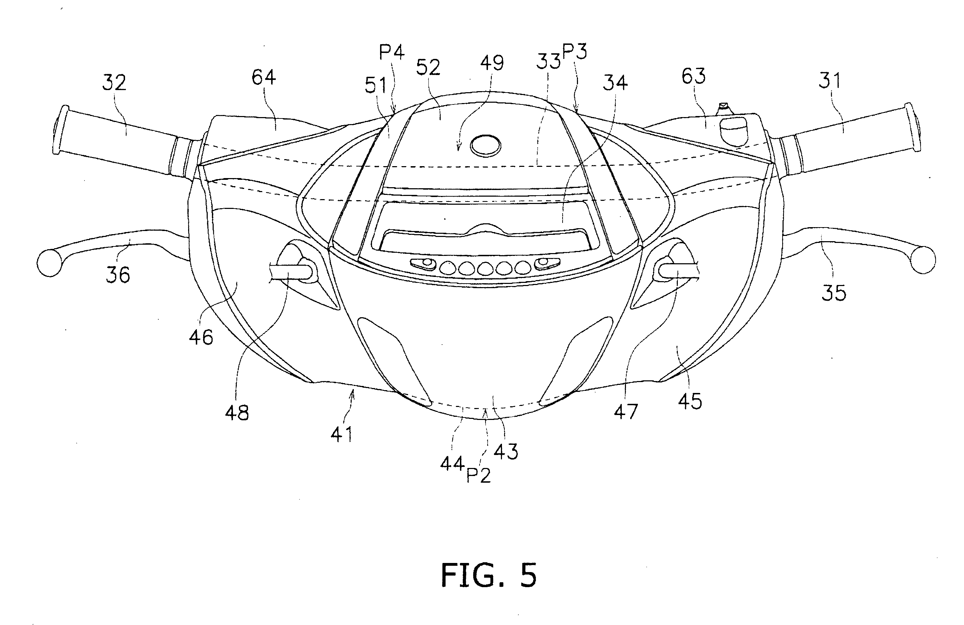

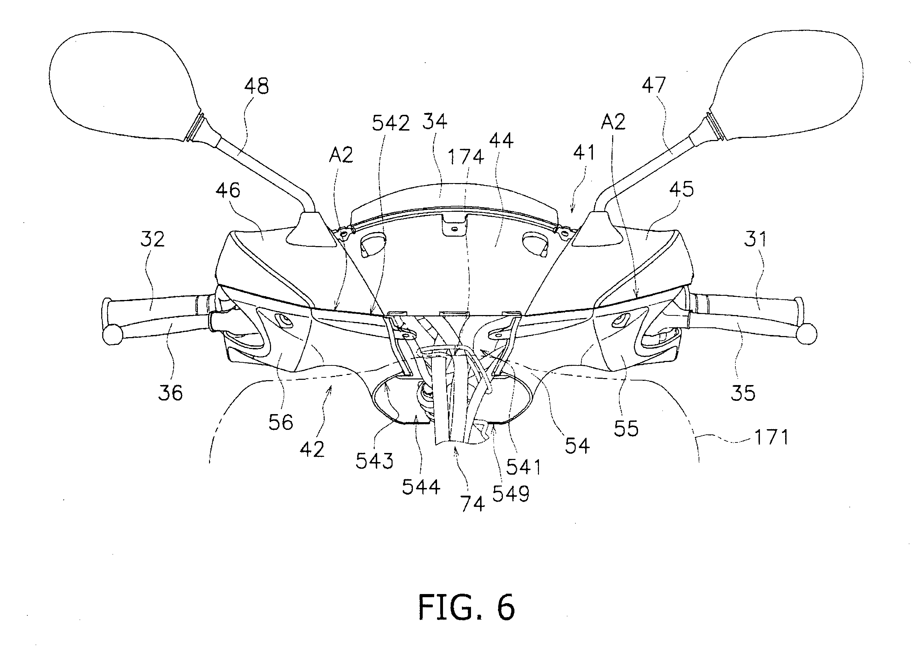

FIG 5 is a top view of the handle cover portion 13. FIG. 6 is a front view of the handle cover portion 13 that the middle handle cover 43 is detached therefrom. As illustrated in FIG. 5, a front end P2 of the upper handle cover 41 is positioned forwards of the coupling portion 33. Rear ends P3 and P4 of the upper handle cover 41 are positioned rearwards of the coupling portion 33. The upper handle cover 41 includes an upper handle cover middle portion 44, an upper handle cover left portion 45 and an upper handle cover right portion 46. The upper handle cover middle portion 44 is positioned transversely between the upper handle cover left portion 45 and the upper handle cover right portion 46. The upper handle cover middle portion 44 is positioned forwards of the coupling portion 33. The upper handle cover middle portion 44 covers the coupling portion 33 from the front side. The upper handle cover left and right portions 45 and 46 cover the coupling portion 33 from the top side. Further, the upper handle cover left and right portions 45 and 46 cover the coupling portion 33 from the front side. A left back mirror 47 is inserted into the upper handle cover left portion 45. On the other hand, a right back mirror 48 is inserted into the upper handle cover right portion 46.

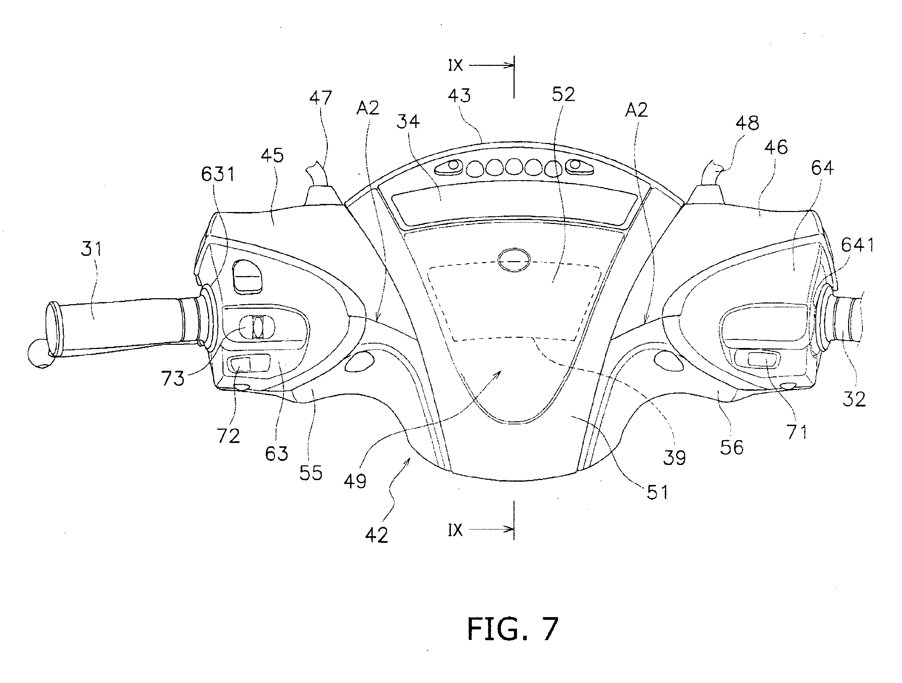

FIG. 7 is a rear view of the handle cover portion 13. As illustrated in FIGS. 4, 6 and 7, the handle cover portion 13 includes a rear handle cover 49. The rear handle cover 49 is a member provided separately from the upper handle cover 41. The rear handle cover 49 is disposed rearwards of the upper handle cover 41. The rear handle cover 49 includes a frame portion 51 and a lid portion 52. The frame portion 51 and the lid portion 52 are members provided separately from each other.

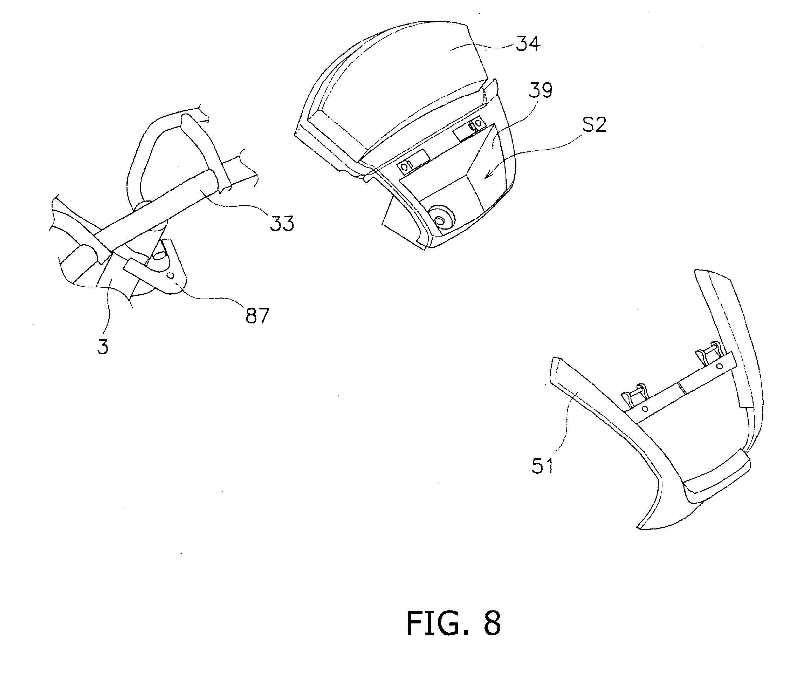

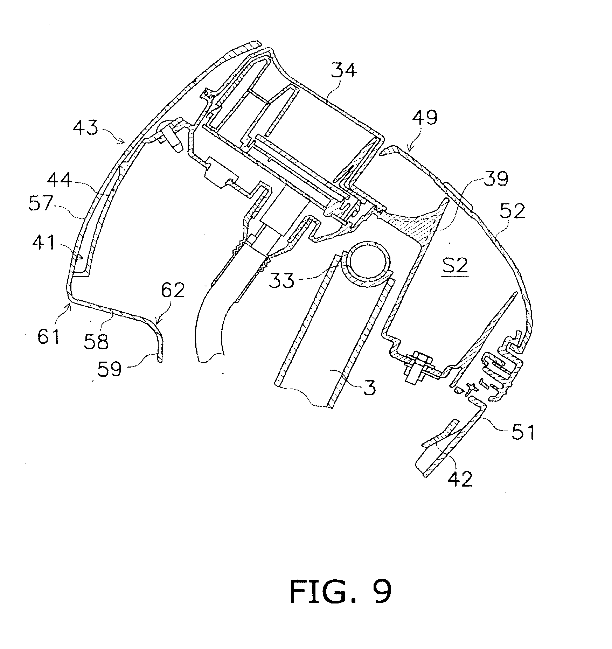

The aforementioned meter unit 34 is disposed between the upper handle cover 41 and the rear handle cover 49. FIG. 8 is an exploded perspective view of the meter unit 34 and the frame portion 51. FIG. 9 is a cross-sectional view of FIG. 7 sectioned along a line IX-IX. A storage portion 39 is fixed to the meter unit 34. The storage portion 39 is at least partially disposed in the inside of the handle cover portion 13. The storage portion 39 is disposed rearwards of the meter unit 34. The frame portion 51 is disposed in the surrounding of the meter unit 34 and the storage portion 39. The lid portion 52 covers the storage portion 39 from the top side. A storage space S2 of the storage portion 39 is opened or closed by means of the lid portion 52. Further, the meter unit 34 is partially positioned higher than the upper handle cover middle portion 44. An upper portion of the middle handle cover 43 is positioned higher than the meter unit 34. The upper portion of the meter unit 34 is covered with the middle handle cover 43 from the front side. Therefore, the upper handle cover 41 can be compactly formed. Accordingly, the upper handle cover 41 can be easily detached in executing maintenance for the inside of the handle cover portion 13. Further, the middle handle cover 43 is disposed only in the transversely middle portion of the handle cover 13. Further, the middle handle cover 43 is a member smaller than the upper handle cover 41 in the vehicle transverse direction. Therefore, the meter unit 34 can be simply and easily protected by the middle handle cover 43 from the front side.

As illustrated in FIG. 6, the lower handle cover 42 includes a lower handle cover middle portion 54, a lower handle cover left portion 55 and a lower handle cover right portion 56. The lower handle cover middle portion 54 is positioned under the upper handle cover middle portion 44. The lower handle cover left portion 55 is positioned under the upper handle cover left portion 45. On the other hand, the lower handle cover right portion 56 is positioned under the upper handle cover right portion 46.

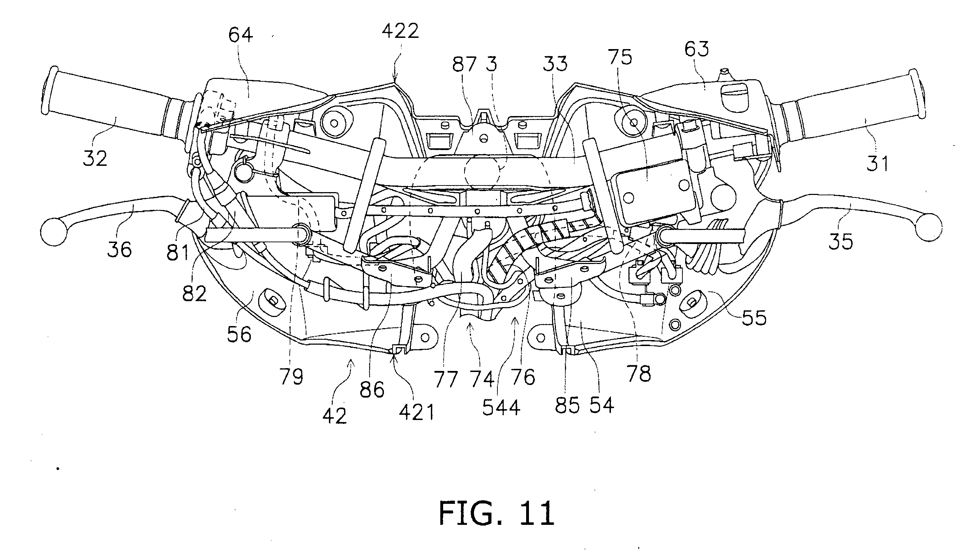

The aforementioned steering shaft 3 is inserted into the lower handle cover middle portion 54. The lower handle cover left and right portions 55 and 56 are respectively extended transversely outwards from positions higher than a bottom end 549 of the lower handle cover middle portion 54. Specifically, the lower handle cover left portion 55 is extended leftwards from a position higher than the bottom end 549 of the lower handle cover middle portion 54. On the other hand, the lower handle cover right portion 56 is extended rightwards from a position higher than the bottom end 549 of the lower handle cover middle portion 54. The lower handle cover middle portion 54 includes a front opening 541 in the front portion thereof. The front opening 541 is ranged from a top edge 542 of the front portion of the lower handle cover middle portion 54 to a bottom edge 543 of the lower handle cover middle portion 54. The front opening 541 is positioned forwards of the steering shaft 3. The transverse width of the front opening 541 is greater than that of the steering shaft 3 (see FIG. 11). The lower handle cover middle portion 54 includes a bottom opening 544 in the bottom portion thereof. The steering shaft 3 is inserted through the bottom opening 544 The bottom opening 544 is communicated with the front opening 541.

As illustrated in FIG. 3, the bottom edge 543 of the lower handle cover middle portion 54 is slanted rearwards and downwards in a vehicle side view. The upper front cover 171 covers the bottom edge 543 of the lower handle cover middle portion 54 from the front side. The bottom edge 543 of the lower handle cover middle portion 54 is disposed lower than a top end 174 of the upper front cover 171 in a vehicle side view. Further, the top end 174 of the upper front cover 171 is positioned higher than the entire bottom edge 543 of the handle cover portion 13 in a vehicle front view. As illustrated in FIG. 2, the bottom edge 543 of the lower handle cover middle portion 54 is positioned lower than the top end 174 of the upper front cover 171 in a front view. The bottom edge 543 of the lower handle cover middle portion 54 is at least partially overlapped with the upper front cover 171 in a front view. As illustrated in FIG. 3, a top end 551 of the lower handle cover left portion 55 is positioned higher than the coupling portion 33 of the handle unit 12. Similarly, the top end of the lower handle cover right portion 56 is positioned higher than the coupling portion 33 of the handle unit 12. The top end 174 of the upper front cover 171 is positioned higher than a bottom end 553 of the lower handle cover left portion 55. Similarly, the top end 174 of the upper front cover 171 is positioned higher than a bottom end 563 of the lower handle cover right portion 56. Further, a front end 421 of the lower handle cover 42 is positioned forwards of the coupling portion 33 in a top view (see FIG. 11). A rear end 422 of the lower handle cover 42 is positioned rearwards of the coupling portion 33 in a top view (see FIG. 11).

As illustrated in FIG. 3, the lower handle cover left portion 55 includes a left opening 545. The left opening 545 is downwardly recessed from the top edge of the lower handle cover left portion 55. The left portion of the handle unit 12 and the left brake bar 35 are inserted through the left opening 545. As illustrated in FIG. 2, the lower handle cover right portion 56 similarly includes a right opening 346. The right opening 346 is downwardly recessed from the top edge of the lower handle cover right portion 56. The right portion of the handle unit 12 and the right brake bar 36 are inserted through the right opening 346.

The middle handle cover 43 is attached to the upper handle cover 41 and the lower handle cover 42. The middle handle cover 43 covers the upper handle cover middle portion 44 from the front side. The middle handle cover 43 covers the lower handle cover middle portion 54 from the front side. The middle handle cover 43 covers the front opening 541 of the lower handle cover 42. Put the above together, the middle handle cover 43 covers the transversely middle portion of the upper handle cover 41 as well as the front opening 541 of the lower handle cover 42.

As illustrated in FIG. 9, the middle handle cover 43 includes a first middle handle cover portion 57, a second middle handle cover portion 58 and a third middle handle cover portion 59. The first middle handle cover portion 57 covers the upper handle cover middle portion 44 from the front side. Further, the first middle handle cover portion 57 covers the upper handle cover middle portion 44 from the top side. The first middle handle cover portion 57 is slanted rearwards and upwards in a side view. The first middle handle cover portion 57 includes a curved surface. The second middle handle cover portion 58 has a plate shape extended in the longitudinal and transverse directions. As illustrated in FIG 3, the second middle handle cover portion 58 is positioned over the top end 174 of the upper front cover 171. As illustrated in FIG. 9, the middle handle cover 43 is bent in a first bent portion 61 between the first middle handle cover portion 57 and the second middle handle cover portion 58. As illustrated in FIG. 2, the first bent portion 61 is transversely extended in a front view. As illustrated in FIG. 9, the third middle handle cover portion 59 has a plate shape extended in the vertical and transverse directions. The middle handle cover 43 is bent in a second bent portion 62 between the second middle handle cover portion 58 and the third middle handle cover portion 59. As illustrated in FIG. 2, the second bent portion 62 is transversely extended in a front view. The second and third middle handle cover portions 58 and 59 cover the front opening 541 of the lower handle cover middle portion 54. A bottom end 591 of the third middle handle cover portion 59 is positioned lower than the top end 174 of the upper front cover 171. Therefore, the third middle handle cover portion 59 is at least partially overlapped with the upper front cover 171 in a front view. It should be noted that the upper front cover 171 covers and protects a portion of the front opening 541 of the lower handle cover middle portion 54 from the front side.

In FIGS. 2, 3, 6 and 7, a reference numeral A2 indicates a boundary between the upper handle cover 41 and the lower handle cover 42. As illustrated in FIGS. 2 and 6, the boundary A2 is visible in a vehicle front view. The boundary A2 is transversely extended in a vehicle front view. In the vehicle front view, the boundary A2 is further disposed continuously to the first bent portion 61. As illustrated in FIG. 3, the boundary A2 is slanted rearwards and upwards in a vehicle side view. As illustrated in FIG. 7, the boundary A2 is visible in a vehicle rear view. As illustrated in FIGS. 2, 3, 6 and 7, the boundary A2 is positioned higher than the bottom end 553 of the lower handle cover left portion 55 and the bottom end 563 of the lower handle cover right portion 56. Further, the boundary A2 is not continued to the bottom edge 543 of the lower handle cover middle portion 54.

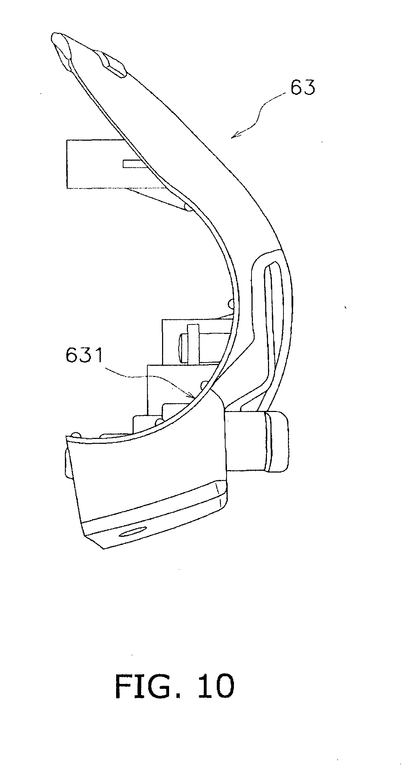

As illustrated in FIGS. 4, 5 and 7, the handle cover portion 13 includes a left switch cover 63 and a right switch cover 64. Each of the left and right switch covers 63 and 64 is a component provided separately from each of the upper and lower handle covers 41 and 42. The left and right switch covers 63 and 64 are attached to the upper and lower handle covers 41 and 42 for covering the coupling portion 33 from the rear side. The left switch cover 63 is disposed rearwards of the upper and lower handle cover left portions 45 and 55. FIG. 10 is a left side view of the left switch cover 63. As illustrated in FIG. 10, the left switch cover 63 includes a recess 631 on the left side face thereof. The recess 631 is forwardly opened. As illustrated in FIG. 7, the rear portion of the left grip portion 31 is disposed within the recess 631. The right switch cover 64 is disposed rearwards of the upper and lower handle cover right portions 46 and 56. The right switch cover 64 includes a recess 641 on the right side face thereof. The recess 641 of the right switch cover 64 is forwardly opened similarly to the recess 631 of the left switch cover 63. The rear portion of the right grip portion 32 is disposed within the recess 641.

As illustrated in FIG. 7, operating switches 71 to 73 are disposed in the rear portion of the handle cover portion 13. The left and right switch covers 63 and 64 cover the surrounding of the operating switches 71 to 73. Specifically, the operating switches 71 to 73 are a starter switch 71, a horn switch 72 and a flasher switch 73. The left switch cover 63 covers the surrounding of the hom switch 72 and the flasher switch 73. The right switch cover 64 covers the surrounding of the starter switch 71.

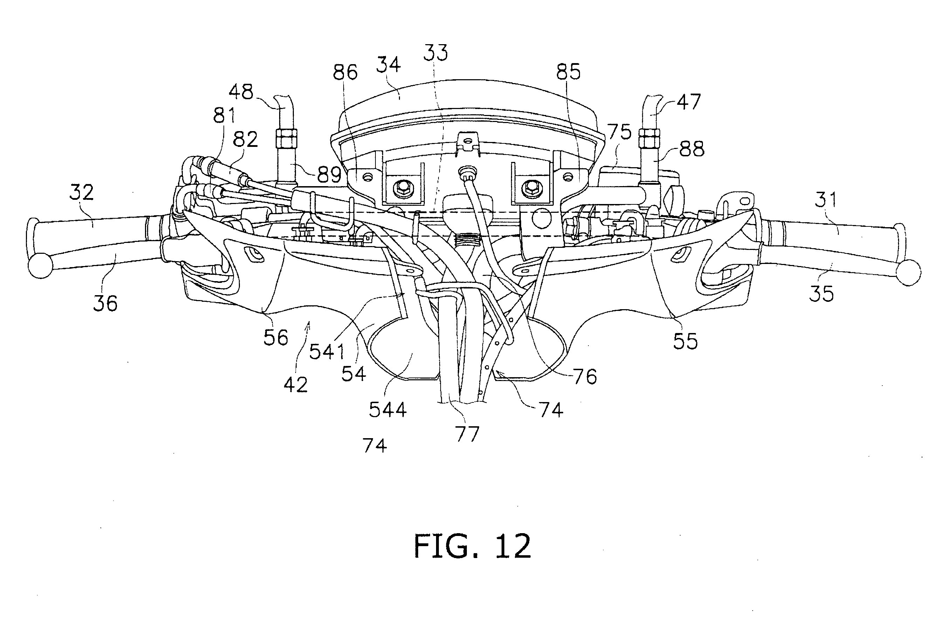

FIG. 11 is a top view of internal devices disposed within the handle cover portion 13. FIG. 12 is a front view of the internal devices disposed within the handle cover portion 13. The internal devices are normally covered with the handle cover portion 13. However, FIGS. 11 and 12 illustrate a condition that the upper handle cover 41 is detached. It should be noted that FIG. 12 illustrates a condition that the meter unit 34 is attached whereas FIG. 11 illustrates a condition that the meter unit 34 is detached. As illustrated in FIGS. 11 and 12, the upper handle cover 41 can be detached from the lower handle cover 42 while the internal devices are disposed on the lower handle cover 42. The coupling portion 33 and the internal devices are exposed to the outside under the condition that the upper handle cover 41 is detached. Especially, the coupling portion 33 and the internal devices are exposed to the upward. Therefore, the coupling portion 33 and the internal devices can be easily accessed from the top side.

The internal devices include a wire portion 74, a brake fluid tank 75 and a brake hose 76. The wire portion 74 is downwardly extended through the lower handle cover middle portion 54. Specifically, the wire portion 74 is downwardly extended while passing in front of the steering shaft 3. The wire portion 74 includes electric power distribution cables 77 to 79 and throttle wires 81 and 82. The electric power distribution cables 77 to 79 are respectively connected to the meter unit 34, the flasher switch 73 and the starter switch 71.

The throttle wires 81 and 82 are connected to the right grip portion 32. The throttle wires 81 and 82 are disposed while passing over the lower handle cover 42. Specifically, the throttle wires 81 and 82 are disposed while passing over the lower handle cover right portion 56. The throttle wires 81 and 82 are disposed while being at least partially positioned higher than the handle unit 12. Further, the throttle wires 81 and 82 are disposed higher than the lower handle cover left and right portions 55 and 56. The throttle wires 81 and 82 are a first throttle wire 81 and a second throttle wire 82. When the right grip portion 32 is turned in one direction, the first throttle wire 81 is configured to be pulled. When the right grip portion 32 is turned in the other direction, the second throttle wire 82 is configured to be pulled. Accordingly, the first and second throttle wires 81 and 82 are configured to transmit the action of the right grip portion 32 to a driving mechanism for a throttle valve (not illustrated in the figures). Both of the first and second throttle wires 81 and 82 are disposed while being at least partially positioned higher than the coupling portion 33. The first and second throttle wires 81 and 82 are disposed while passing in front of the coupling portion 33.

The brake fluid tank 75 is attached to the coupling portion 33. The brake fluid tank 75 stores a brake fluid. The brake fluid tank 75 is at least partially positioned higher than the coupling portion 33. The brake fluid tank 75 is positioned over the lower handle cover left portion 55. The brake hose 76 is connected to the brake fluid tank 75. The brake hose 76 is configured to direct the brake fluid to the brake device 28 (see FIG. 1). The brake hose 76 is downwardly extended while passing in front of the steering shaft 3.

The handle cover portion 13 accommodates meter attachment portions 85, 86 and 87 for attaching the meter unit 34 to the handle unit 12. Specifically, the meter attachment portions 85, 86 and 87 are front meter attachment portions 85 and 86 and a rear meter attachment portion 87. The front meter attachment portions 85 and 86 are fixed to the coupling portion 33. Further, the front meter attachment portions 85 and 86 are fixed to the steering shaft 3. The front meter attachment portions 85 and 86 are positioned forwards of the coupling portion 33. The meter unit 34 is fixed to the front meter attachment portions 85 and 86. The front meter attachment portions 85 and 86 are a first front meter attachment portion 85 and a second front meter attachment portion 86. The first and second front meter attachment portions 85 and 86 are transversely disposed away from each other. The rear meter attachment portion 87 is positioned rearwards of the coupling portion 33. As illustrated in FIG. 8, the rear meter attachment portion 87 is fixed to the steering shaft 3. The storage portion 39 is fixed to the rear meter attachment portion 87.

As illustrated in FIG. 12, the handle cover portion 13 accommodates a left back mirror attachment portion 88 and a right back mirror attachment portion 89. The aforementioned left back mirror 47 is fixed to the coupling portion 33 through the left back mirror attachment portion 88. Specifically, the left back mirror 47 is detachably attached to the left back mirror attachment portion 88. On the other hand, the aforementioned right back mirror 48 is fixed to the coupling portion 33 through the right back mirror attachment portion 89. Specifically, the right back mirror 48 is detachably attached to the right back mirror attachment portion 89.

The motorcycle 1 according to the present exemplary embodiment has the following features.

The handle cover portion 13 includes the upper handle cover 41 and the lower handle cover 42. In other words, the handle cover portion 13 has a vertically split structure. Therefore, the upper handle cover 41 can be easily detached from the vehicle body while the lower handle cover 42 remains attached thereto in executing a maintenance work. Accordingly, maintenance performance can be enhanced for the inside of the handle cover portion 13.

As illustrated in FIG. 2, the vertical length L1 of the lower front cover 172 is greater than the vertical length L2 of the upper front cover 171. Therefore, a large-diameter wheel as the front wheel 5 can be attached to the vehicle. Further, the bottom edge 543 of the lower handle cover middle portion 54 is disposed lower than the top end 174 of the upper front cover 171 in a vehicle side view. Therefore, a large space can be reliably produced in the inside of the upper front cover 171 without increasing the height of the motorcycle 1. Accordingly, it is possible to increase the size of the head light portion 26 to be disposed in the upper front cover 171. Yet further, the handle cover portion 13 includes the upper handle cover 41 and the lower handle cover 42. Therefore, the upper handle cover 41 can be easily detached from the vehicle body while the lower handle cover 42 remains attached thereto in executing a maintenance work, even if a small distance is produced vertically between the top end 174 of the upper front cover 171 and the lower handle cover 42. Accordingly, maintenance performance can be enhanced for the inside of the handle cover portion 13. Moreover, the lower handle cover middle portion 54 includes the front opening 541 in the front portion thereof, as illustrated in FIG. 12. Therefore, accessibility from the front side can be enhanced for the inside of the lower handle cover 42 that remains attached to the vehicle body. Especially, a portion of the wire portion 74 is downwardly extended while passing in front of the steering shaft 3. Therefore, the wire portion 74 can be easily accessed through the front opening 541. Accordingly, maintenance performance can be enhanced for the wire portion 74 disposed within the handle cover portion 13. Put the above together, the motorcycle 1 according to the present exemplary embodiment achieves superior maintenance performance for the inside of the handle cover portion 13 while being equipped with a large-diameter wheel and a large head light.

The handle cover portion 13 has a vertically split structure. Compared to a longitudinally split structure, seams among the covers of the handle cover portion 13 are less distinguishable and the area of the visible painted surface is larger. Accordingly, the texture appearance of the handle cover portion 13 can be enhanced.

The lower handle cover 42 can be detached from the handle unit 12 through the front opening 541 of the lower handle cover 42. Accordingly, the lower handle cover 42 can be easily detached without detaching the handle unit 12 from the steering shaft 3. In assembling, on the other hand, the lower handle cover 42 can be attached after the handle unit 12 is attached to the steering shaft 3. In other words, it is not required to preliminarily attach the lower handle cover 42 before attachment of the handle unit 12. Therefore, assemble performance can be enhanced.

As illustrated in FIGS. 2 and 6, the middle handle cover 43 covers the front opening 541 of the lower handle cover 42. The inside of the handle cover portion 13 can be thereby protected. Further, the middle handle cover 43 can make the front opening 541 invisible in an external view of the motorcycle 1.

The middle handle cover 43 covers the upper handle cover middle portion 44 as well as the front opening 541 of the lower handle cover 42. Accordingly, a visual aspect of the handle cover portion 13 can be thereby enhanced. Further, the middle handle cover 43 can protect the upper handle cover middle portion 44.

The throttle wires 81 and 82 are covered with the handle cover portion 13. Therefore, the distance between the upper front cover 171 and the handle cover portion 13 can be further reduced than that when the throttle wires 81 and 82 are disposed between the handle cover portion 13 and the upper front cover 171. In other words, the top end 174 of the upper front cover 171 can be disposed in a higher position. Accordingly, a larger space can be reliably produced in the inside of the upper front cover 171. Especially when two throttle wires are disposed on the outside of the handle cover portion, a larger clearance is required between the handle cover portion and the upper front cover compared to the structure that only a throttle wire is disposed. According to the motorcycle 1 of the present exemplary embodiment, however, two throttle wires 81 and 82 are covered with the handle cover portion 13. Therefore, the effect of reducing the distance between the upper front cover 171 and the handle cover portion 13 is remarkable.

The throttle wires 81 and 82 are at least partially positioned higher than the coupling portion 33. The throttle wires 81 and 82 are also positioned higher than the lower handle cover left and right portions 55 and 56. Further, the throttle wires 81 and 82 are disposed while passing in front of the coupling portion 33. Yet further, the throttle wires 81 and 82 are exposed upwards when the upper handle cover 41 is detached. Therefore, the throttle wires 81 and 82 can be easily accessed. In other words, maintenance performance can be enhanced for the throttle wires 81 and 82.

The meter unit 34 is fixed to the handle unit 12. Therefore, the upper handle cover 41 can be easily detached without detaching the meter unit 34.

The storage portion 39 is fixed to the meter unit 34. Therefore, either the upper handle cover 41 or the lower handle cover 42 can be compactly formed compared to the structure that the storage portion 39 is attached to either the upper handle cover 41 or the lower handle cover 42.

Each of the left and right head light units 261 and 262 is slanted upwards and transversely outwards in a vehicle front view. However, a large space is herein reliably produced in the inside of the upper front cover 171. Therefore, flexibility in arrangement can be enhanced even for the head light units requiring such a large space due to the shape thereof.

As illustrated in FIG. 3, the top end 551 of the lower handle cover left portion 55 is positioned higher than the coupling portion 33 of the handle unit 12. Therefore, the depth of the inner space of the lower handle cover left portion 55 can be increased. Similarly, the top end of the lower handle cover right portion 56 is positioned higher than the coupling portion 33 of the handle unit 12. Therefore, the depth of the inner space of the lower handle cover right portion 56 can be increased. Accordingly, storage performance of the lower handle cover 42 can be enhanced.

The left and right switch covers 63 and 64 are formed separately from the upper and lower handle covers 41 and 42. Therefore, the left and right switch covers 63 and 64 can be easily shaped in molds.

As illustrated in FIG. 2, the top end 174 of the upper front cover 171 is positioned higher than the bottom end 553 of the lower handle cover left portion 55. Further, the top end 174 of the upper front cover 171 is positioned higher than the bottom end 563 of the lower handle cover right portion 56. Accordingly, a larger space can be reliably produced in the inside of the upper front cover 171.

The boundary A2 between the upper handle cover 41 and the lower handle cover 42 is not continued to the bottom edge 543 of the lower handle cover middle portion 54. Therefore, the upper handle cover 41 can be easily detached from the vehicle body while the lower handle cover 42 remains attached thereto in executing a maintenance work. Accordingly, maintenance performance can be enhanced for the inside of the handle cover portion 13.

An exemplary embodiment of the present invention has been explained above. However, the present invention is not limited to the aforementioned exemplary embodiment, and a variety of changes can be made without departing from the scope of the present invention.

The motorcycle 1 of the present invention may not be limited to a scooter-type motorcycle, and may be any suitable type motorcycle such as a sport type motorcycle, an off-road type motorcycle or a moped type motorcycle.

The surface of the flat footboard does not necessarily have a completely flat shape, and may have a somehow convexo-concaves shape. Alternatively, the surface of the flat footboard may have a curved shape.

The middle handle cover 43 may cover only the front opening 541. In this case, the middle handle cover 43 can protect the inside of the handle cover portion 13 while being compactly formed.

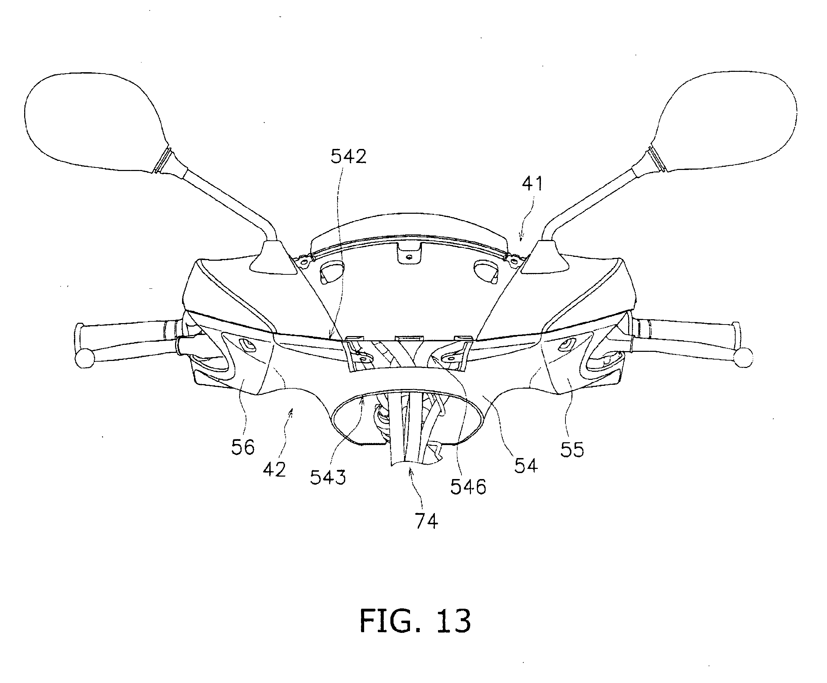

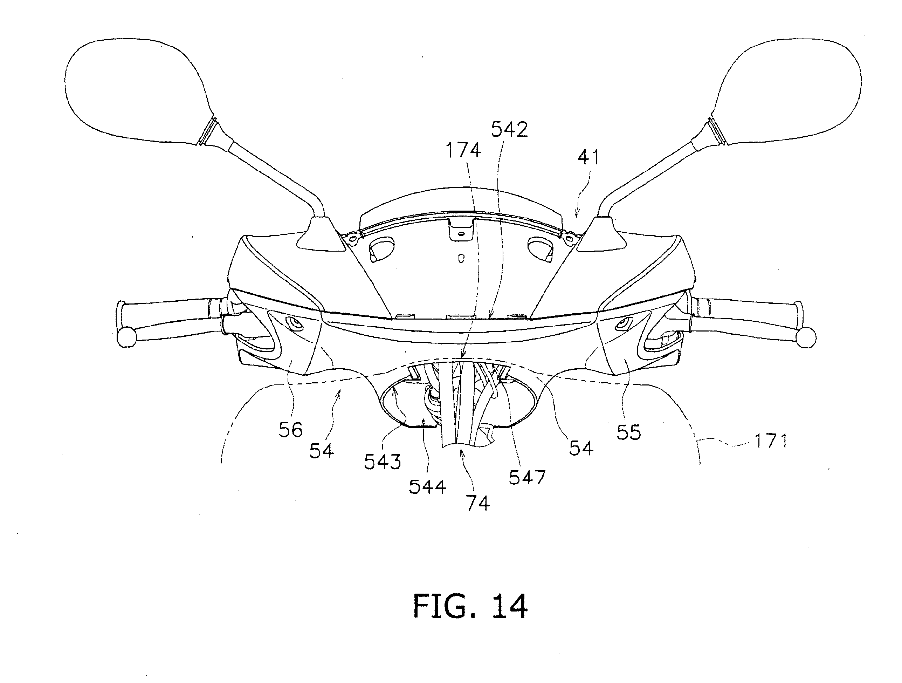

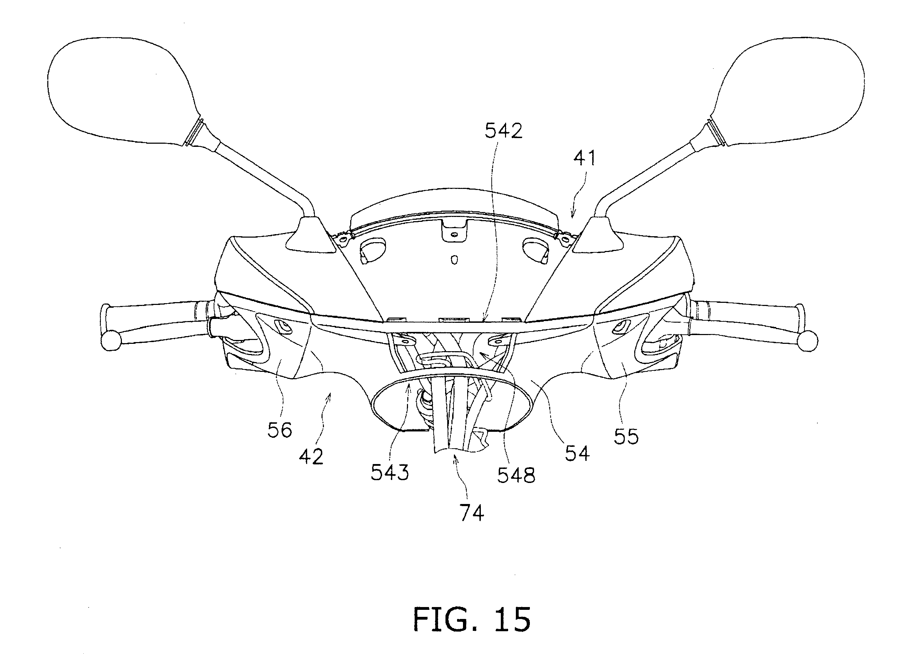

In the aforementioned exemplary embodiment, the lower handle cover 42 includes the front opening 541, ranging from the top edge 542 to the bottom edge 543, in the front portion of the lower handle cover middle portion 54. However, the shape of the front opening may not be limited to the above. For example, the front opening may be formed as a front opening 546 illustrated in FIG. 13. In this case, the front opening 546 reaches the top edge 542 but does not reach the bottom edge 543 in the front portion of the lower handle cover middle portion 54. The front opening 546 is only opened upwards. In this case, stiffness of the lower handle cover 42 can be enhanced due to the structure of the front opening 546 not reaching the bottom edge 543. Further, through detachment of the upper handle cover 41, a large space can be reliably produced for accessing the middle portion that the wire portion 74 is concentrated from the top side. Thus, maintenance performance can be enhanced. Alternatively, the front opening may be formed as a front opening 547 illustrated in FIG. 14. In this case, the front opening 547 reaches the bottom edge 543 of the front portion of the lower handle cover middle portion 54 but does not reach the top edge 542 of the front portion of the lower handle cover middle portion 54. The front opening 541 is only opened downwards. Further, the top edge of the front opening 547 is positioned lower than the top edge of the upper front cover 171 (see a dashed two-dotted line in FIG 14). In this case, stiffness of the lower handle cover 42 can be enhanced due to the structure of the front opening 547 not reaching the top edge 542. Further, the inside of the handle cover portion 13 is covered, from the front side, with a portion of the lower handle cover 42, which is positioned over the front opening 547. Yet further, the front opening 547 can be covered with the upper front cover 171 from the front side without extending the upper front cover 171 to an extremely high position. Therefore, the inside of the handle cover portion 13 can be protected even when the middle handle cover 43 is not provided. Yet alternatively, the front opening may be formed as a front opening 548 illustrated in FIG. 15. In this case, the front opening 548 is a through hole formed through the front portion of the lower handle cover middle portion 54. The front opening 548 longitudinally penetrates the front portion of the lower handle cover middle portion 54. The front opening 548 is closed in the respective upward, downward, rightward and leftward directions. In this case, stiffness of the lower handle cover 42 can be further enhanced, and simultaneously, the transverse size of the front opening 548 can be increased.

It should be noted that FIGS. 13 to 15 omit illustration of the middle handle cover 43 for the sake of explanation.

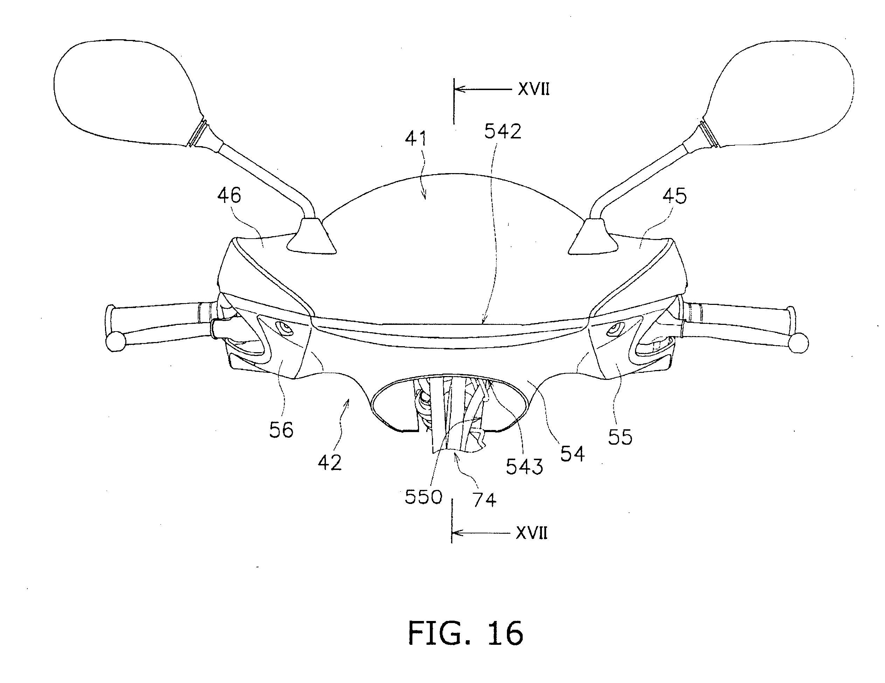

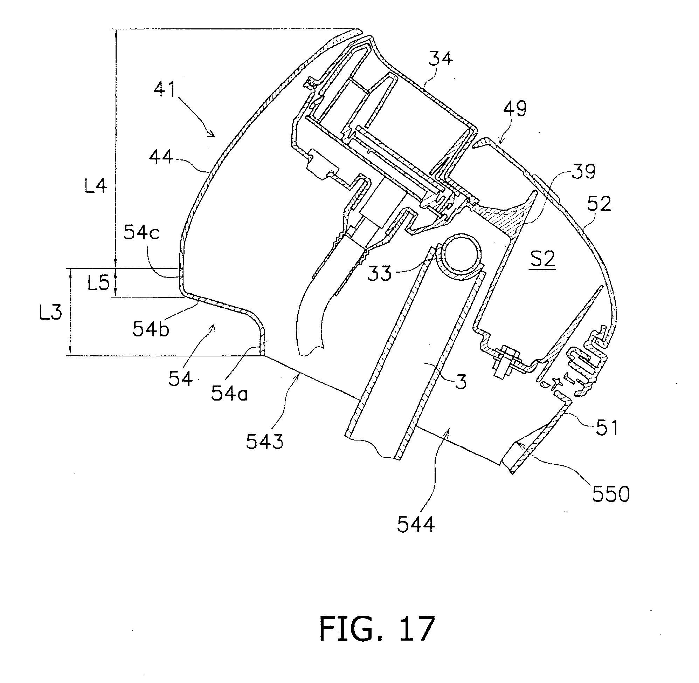

Unlike the aforementioned exemplary embodiments, the front opening may not be formed in the front portion of the lower handle cover middle portion 54. In this case, the wire portion 74 is covered with the front portion of the lower handle cover middle portion 54 from the front side, as illustrated in FIG. 16. Further, without the aforementioned middle handle cover 43, the inside of the handle cover portion 13 is covered from the front side with and protected by the upper and lower handle covers 41 and 42. FIG. 17 is a cross-sectional view of FIG 16 sectioned along a line XVII-XVII. As illustrated in FIG. 17, a vertical length L3 of the front portion of the lower handle cover middle portion 54 is less than a vertical length L4 of the upper handle cover middle portion 44. In other words, the vertical length L3 of the front portion of the lower handle cover middle portion 54 is less than the vertical length L4 of the transversely middle portion of the upper handle cover 41. With the structure, accessibility can be enhanced for the internal devices disposed over the lower handle cover middle portion 54 similarly to the aforementioned exemplary embodiments. Further, the lower handle cover middle portion 54 includes a neck 54a, a front protrusion 54b and a front wall 54c. The neck 54a is downwardly protruded from the aforementioned lower handle cover left and right portions 55 and 56. The neck 54a includes the bottom edge 543 of the aforementioned lower handle cover middle portion 54. The neck 54a includes the bottom opening 544 The steering shaft 3 is inserted into the neck 54a. The front protrusion 54b is forwardly protruded from the upper portion of the neck 54a. The front wall 54c is upwardly extended from the front portion of the front protrusion 54b. A vertical length L5 of the front wall 54c is less than the vertical length L4 of the upper handle cover middle portion 44. With the structure, accessibility can be enhanced for the internal devices disposed over the lower handle cover middle portion 54 similarly to the aforementioned exemplary embodiments.

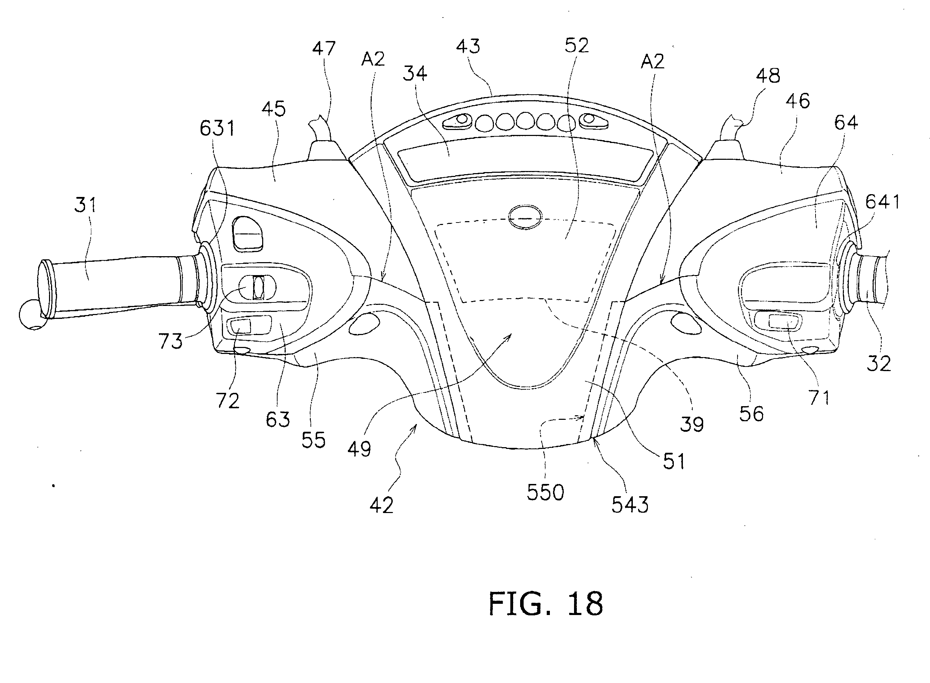

FIG. 18 is a rear view of the handle cover portion 13 illustrated in FIG. 16. When the lower handle cover middle portion 54 does not include an opening in the front portion thereof, it is preferable to form an opening 550 in the rear portion of the lower handle cover middle portion 54 as illustrated in FIGS. 16 to 18. The opening 550 is formed in the lower handle cover middle portion 54 while ranging from the top edge to the bottom edge in the rear portion of the lower handle cover middle portion 54. Accordingly, the lower handle cover 42 can be detached without detaching the handle unit 12. It should be noted that the opening 550 of the rear portion of the lower handle cover middle portion 54 is covered with the rear handle cover 49.

Even when the lower handle cover middle portion 54 includes an opening in the front portion thereof as illustrated in FIGS. 13 to 15, the lower handle cover middle portion 54 preferably includes an opening in the rear portion thereof similarly to the opening 550 illustrated in FIGS. 15 to 18 where at least either of the top and the bottom of the opening formed in the front portion of the lower handle cover middle portion 54 is closed.

### <Industrial Applicability>

According to the present invention, it is possible to provide a motorcycle that is equipped with a large-diameter wheel and a large head light and implements superior maintenance for the inside of a handle cover.

### REFERENCE SIGNS LIST

- 1: Motorcycle
- 3: Steering shaft
- 4: Front fork
- 5: Front wheel
- 31, 32: Grip portions
- 33: Coupling portion
- 12: Handle unit
- 13: Handle cover portion
- 21: Head pipe portion
- 26: Head light portion
- 34: Meter unit
- 39: Storage portion
- 41: Upper handle cover
- 42: Lower handle cover
- 43: Middle handle cover
- 54: Lower handle cover middle portion
- 55, 56: Lower handle cover left/right portion
- 63, 64: Switch cover
- 71-73: Operating switch
- 74: Wire portion
- 81, 82: Throttle wire
- 171: Upper front cover
- 172: Lower front cover
- 261: Left head light unit
- 262: Right head light unit
- 541, 546-548: Front opening
- A2: Boundary between upper handle cover and lower handle cover

## Claims

1. A motorcycle, comprising:
a head pipe portion (21) positioned transversely in the middle of the motorcycle;
a steering shaft (3) to be inserted into the head pipe portion (21);
a handle unit (12) to be coupled to the steering shaft (3), the handle unit (12) including: a pair of right and left grip portions (31, 32) to be gripped by a rider of the motorcycle; and
a coupling portion (33) coupling the right and left grip portions (31, 32);
a handle cover portion (13) including: an upper handle cover (41) disposed over the coupling portion (33); and a lower handle cover (42) formed separately from the upper handle cover (41), the lower handle cover (42) disposed under the coupling portion (33) and the upper handle cover (41);
a wire portion (74) covered with the handle cover portion (13);
a front fork (4) coupled to a bottom portion of the steering shaft (3);
a front wheel (5) supported by a bottom portion of the front fork (4);
an upper front cover (171) disposed forwards of the head pipe portion (21), the upper front cover (171) disposed over the front wheel (5);
a head light portion (26) disposed in the upper front cover (171); and
a lower front cover (172) positioned under the upper front cover (171), the lower front cover (172) coupled to the upper front cover (171), the lower front cover (172) disposed rearwards of the front wheel (5),
the upper front cover (171) and the lower front cover (172) provides a recess (173) backwardly recessed in a side view of the motorcycle, a rear portion of the front wheel (5) is disposed in the recess (173), wherein the upper front cover (171) is positioned higher than a top end (P1) of the recess (173) in a front view of the vehicle, and the lower front cover (172) is positioned lower than the top end (P1) of the recess (173) in a front view of the vehicle, a conceptual line (A1) is a horizontal line passing through the top end (P1) of the recess (173) in a front view of the motorcycle, wherein a vertical length (L1) from a bottom end of the lower front cover (172) to said conceptual line (A1) is greater than a vertical length (L2) from a top end of the upper front cover (171) to said conceptual line (A1),
the lower handle cover (42) includes: a lower handle cover middle portion (54) in which the steering shaft (3) is inserted; and lower handle cover lateral portions (55, 56) extended transversely outwards from positions higher than a bottom end (549) of the lower handle cover middle portion (54),
the lower handle cover middle portion (54) includes a bottom edge disposed lower than the top end of the upper front cover (171) in a motorcycle side view, the wire portion (74) is downwardly extended through the lower handle cover middle portion (54), **characterized in that**
the lower handle cover middle portion (54) includes an opening (541, 546-548) in a front portion thereof, or
a vertical length (L3) of the front portion of the lower handle cover middle portion (54) is less than a vertical length (L4) of a transversely middle portion of the upper handle cover (41).

2. A motorcycle according to claim 1, **characterized in that** the opening (541) in a front portion of the lower handle cover middle portion (54) is ranged from a top edge of the front portion of the lower handle cover middle portion (54) to a bottom edge of the lower handle cover middle portion (54).

3. A motorcycle according to claim 1 or 2, **characterized in that** the wire portion (74) is disposed while passing in front of the steering shaft (3).

4. A motorcycle according to one of the claims 1 to 3, **characterized in that** the handle cover portion (13) further includes a middle handle cover (43) for covering the opening (541) in a front portion of the lower handle cover middle portion (54).

5. A motorcycle according to claim 4, **characterized in that** the middle handle cover (43) covers the transversely middle portion of the upper handle cover (41) as well as the opening (541) in a front portion of the lower handle cover middle portion (54).

6. A motorcycle according to one of the claims 1 to 5, **characterized in that** the wire portion (74) includes a throttle wire to be connected to either of the right and left grip portions (31, 32).

7. A motorcycle according to claim 6, **characterized in that** the throttle wire is at least partially positioned higher than the lower handle cover (42).

8. A motorcycle according to one of the claims 1 to 7, **characterized by** a meter unit (34) configured to display motorcycle-related information,
wherein the meter unit (34) is fixed to the handle unit (12).

9. A motorcycle according to claim 8, **characterized by** a storage portion (39) at least partially disposed within the handle cover portion (13),
wherein the storage portion (39) is fixed to the meter unit (34).

10. A motorcycle according to one of the claims 1 to 9, **characterized in that** the head light portion (26) includes a pair of right and left head light units (262, 261), and
each of the right and left head light units (262, 261) has a shape slanted upwards and transversely outwards in a motorcycle front view.

11. A motorcycle according to one of the claims 1 to 10, **characterized in that**
each of the lower handle cover lateral portions includes a top end positioned higher than the coupling portion (33) of the handle unit (12).

12. A motorcycle according to one of the claims 1 to 11, **characterized by** an operating switch (71-73) disposed in a rear portion of the handle cover portion (13),
wherein the handle cover portion (13) further includes a switch cover (63, 64) for covering a surrounding of the operating switch (71-73), and
the switch cover (63, 64) is formed separately from the upper handle cover (41) and the lower handle cover (42).

13. A motorcycle according to one of the claims 1 to 12, **characterized in that** the top end of the upper front cover (171) is positioned higher than a bottom end of each lower handle cover lateral portion (55,56).

14. A motorcycle according to one of the claims 1 to 13, **characterized in that** a boundary (A2) between the upper handle cover (41) and the lower handle cover (42) does not continue to the bottom edge of the lower handle cover middle portion (54).

15. A motorcycle according to one of the claims 1 to 14, **characterized in that** the lower handle cover middle portion (54) includes an opening (550) in a rear portion thereof,
the opening of the rear portion of the lower handle cover middle portion (54) is ranged from a top edge to a bottom edge in the rear portion of the lower handle cover middle portion (54).

16. A motorcycle according to claim 15, **characterized in that** the handle cover portion (13) further includes a rear handle cover (49) covering the opening (550) of the rear portion of the lower handle cover middle portion (54).

## Patentansprüche

1. Motorrad, aufweisend:
einen Kopfrohrabschnitt (21), quer positioniert in der Mitte des Motorrades;
eine Lenkwelle (3), die in den Kopfrohrabschnitt (21) eingesetzt wird,
eine Handgriffeinheit (12), um mit der Lenkwelle (3) gekuppelt zu sein, wobei die Handgriffeinheit (12) ein Paar von rechten und linken Griffabschnitten (31, 32) enthält, um durch einen Fahrer des Motorrades ergriffen zu werden; und
einen Kupplungsabschnitt (33), der die linken und rechten Griffabschnitte (31, 32) kuppelt;
einen Handgriffabdeckungsabschnitt (13), enthaltend eine obere Hangriffabdeckung (41), angeordnet über dem Kupplungsabschnitt (33); und eine untere Hangriffabdeckung (42), separat gebildet von der oberen Hangriffabdeckung (41),
wobei die untere Handgriffabdeckung (42) unter dem Kupplungsabschnitt (33) und der oberen Hangriffabdeckung (41) angeordnet ist;
einen Drahtabschnitt (74), abgedeckt mit dem Handgriffabdeckungsabschnitt (13);
eine Vordergabel (4), gekuppelt mit einem Bodenabschnitt der Lenkwelle (3);
ein Vorderrad (5), gelagert durch einen Bodenabschnitt der Vordergabel (4);
eine obere Vorderabdeckung (171), angeordnet vor dem des Kopfrohrabschnittes (21), wobei die obere Vorderabdeckung (171) über dem Vorderrad (5) angeordnet ist;
einen Scheinwerferabschnitt (26), angeordnet in der oberen Vorderabdeckung (171); und
eine untere Vorderabdeckung (172), positioniert unter der oberen Vorderabdeckung (171), wobei die untere Vorderabdeckung (172) mit der oberen Vorderabdeckung (171) gekuppelt ist, mit der unteren Vorderabdeckung (172), angeordnet hinter dem Vorderrad (5),
wobei die obere Vorderabdeckung (171) und die untere Vorderabdeckung (172) eine Aussparung, nach hinten ausgespart in einer Seitenansicht des Motorrades, schaffen, wobei ein hinterer Abschnitt des Vorderrades (5) in der Aussparung (173) angeordnet ist, wobei die obere Vorderabdeckung (171) höher als ein oberes Ende (P1) der Aussparung (173) in einer Vorderansicht des Fahrzeuges angeordnet ist und die untere Vorderabdeckung (172) niedriger als das obere Ende (P1) der Aussparung (173) in einer Vorderansicht des Fahrzeuges positioniert ist, eine schematische Linie (A1) eine horizontale Linie ist, die durch das Spitzenende (P1) der Aussparung (173) in einer Vorderansicht des Motorrades hindurchgeht,
wobei eine vertikale Länge (L1) von einem Bodenende der unteren Vorderabdeckung (172) zu der schematische Linie (A1) größer ist als eine vertikale Länge (L2) von einem oberen Ende der oberen Vorderabdeckung (171) zu der schematische Linie (A1),
wobei die untere Handgriffabdeckung (42) enthält: einen unteren Handgriffabdeckung- Mittelabschnitt (54), in den die Lenkwelle (3) eingesetzt ist, und untere Handgriffabdeckung- Seitenabschnitte (55, 56), die sich quer nach außen von Positionen erstrecken, die höher als ein Bodenende (549) des Handgriffabdeckung- Mittelabschnittes (54) sind,
wobei der untere Handgriffabdeckung- Mittelabschnitt (54) eine Bodenkante enthält, die niedriger als das obere Ende der oberen Vorderabdeckung (171) in einer Seitenansicht des Motorrades ist und der Drahtabschnitt (74) sich nach unten durch den unteren Handgriffabdeckung- Mittelabschnitt (54) erstreckt, **dadurch gekennzeichnet, dass**
der untere Handgriffabdeckung- Mittelabschnitt (54) eine Öffnung (541, 546-548) in einem vorderen Abschnitt desselben enthält, oder
eine vertikale Länge (L3) des vorderen Abschnittes des unteren Handgriffabdeckung- Mittelabschnittes (54) kleiner als eine vertikale Länge (L4) eines Quer- Mittelabschnittes der oberen Hangriffabdeckung (41) ist.

2. Motorrad nach Anspruch 1, **dadurch gekennzeichnet, dass** die Öffnung (541) in einem vorderen Abschnitt des unteren Handgriffabdeckung- Mittelabschnittes (54) im Bereich von einer obersten Kante des vorderen Abschnittes des unteren Handgriffabdeckung- Mittelabschnittes (54) zu einer Bodenkante des unteren Handgriffabdeckung- Mittelabschnittes (54) ist.

3. Motorrad nach Anspruch 1 oder 2, **dadurch gekennzeichnet, dass** der Drahtabschnitt (74) angeordnet ist, während er vor der Lenkwelle verläuft.

4. Motorrad nach einem der Ansprüche 1 bis 3, **dadurch gekennzeichnet, dass** der Handgriffabdeckungsabschnitt (13) außerdem eine Mittelstück- Handgriffabdeckung (43) zum Abdecken der Öffnung (541) in einem vorderen Abschnitt des unteren Handgriffabdeckung- Mittelabschnittes (54) enthält.

5. Motorrad nach Anspruch 4, **dadurch gekennzeichnet, dass** die Mittelstück-Handgriffabdeckung (43) den Quer- Mittelabschnitt der oberen Hangriffabdeckung (41) sowie die Öffnung (541) in einem vorderen Abschnitt des unteren Handgriffabdeckung- Mittelabschnittes (54) abdeckt.

6. Motorrad nach einem der Ansprüche 1 bis 5, **dadurch gekennzeichnet, dass** der Drahtabschnitt (74) einen Gaszug enthält, um mit jedem von den rechten und linken Griffabschnitten (31, 32) verbunden zu sein.

7. Motorrad nach Anspruch 6, **dadurch gekennzeichnet, dass** der Gaszug zumindest teilweise höher als die untere Handgriffabdeckung (42) positioniert ist.

8. Motorrad nach einem der Ansprüche 1 bis 7, **gekennzeichnet durch** eine Messeinheit (34), konfiguriert motorradbezogene Informationen anzuzeigen, wobei die Messeinheit (34) an der Handgriffeinheit (12) befestigt ist.

9. Motorrad nach Anspruch 8, **gekennzeichnet durch** einen Speicherabschnitt (39), zumindest teilweise innerhalb des Handgriffabdeckungsabschnittes (13) angeordnet, wobei die Speichereinheit (39) an der Messeinheit (34) befestigt ist.

10. Motorrad nach einem der Ansprüche 1 bis 9, **dadurch gekennzeichnet, dass** der Scheinwerferabschnitt (26) ein Paar von rechten und linken Scheinwerfereinheiten (262, 261) enthält und
jede der rechten und linken Scheinwerfereinheiten (262, 261) eine Form, geneigt nach oben und quer nach außen, in einer Vorderansicht des Motorrades hat.

11. Motorrad nach einem der Ansprüche 1 bis 10, **dadurch gekennzeichnet, dass** der unteren Handgriffabdeckung- Seitenabschnitte ein oberes Ende enthält, höher als der Kupplungsabschnitt (33) der Handgriffeinheit (12) positioniert.

12. Motorrad nach einem der Ansprüche 1 bis 11, **gekennzeichnet durch** einen Betätigungsschalter (71-73), angeordnet in einem hinteren Abschnitt des Handgriffabdeckungsabschnittes (13),
wobei der Handgriffabdeckungsabschnitt (13) außerdem eine Schalterabdeckung (83, 84) zum Abdecken einer Umgebung des Betätigungsschalters (71-73) enthält und
die Schalterabdeckung (83, 84) separat von der oberen Hangriffabdeckung (41) und der unteren Hangriffabdeckung (42) gebildet ist.

13. Motorrad nach einem der Ansprüche 1 bis 12, **dadurch gekennzeichnet, dass** das obere Ende der oberen Vorderabdeckung (171) höher als ein Bodenende jedes der unteren Handgriffabdeckung- Seitenabschnitte (55, 56) ist.

14. Motorrad nach einem der Ansprüche 1 bis 13, **dadurch gekennzeichnet, dass** sich eine Begrenzung (A2) zwischen der oberen Hangriffabdeckung (41) und der unteren Hangriffabdeckung (42) nicht zu der Bodenkante des unteren Handgriffabdeckung- Mittelabschnittes (54) fortsetzt.

15. Motorrad nach einem der Ansprüche 1 bis 14, **dadurch gekennzeichnet, dass** der untere Handgriffabdeckung- Mittelabschnitt (54) eine Öffnung (550) in einem hinteren Abschnitt desselben enthält,
wobei die Öffnung des hinteren Abschnittes des unteren Handgriffabdeckung-Mittelabschnittes (54) im Bereich von einer obersten Kante zu einer Bodenkante in dem hinteren Abschnitt des unteren Handgriffabdeckung- Mittelabschnittes (54) ist.

16. Motorrad nach Anspruch 15, **dadurch gekennzeichnet, dass** der Handgriffabdeckungsabschnitt (13) außerdem eine hintere Handgriffabdeckung (49) enthält, die die Öffnung (550) des hinteren Abschnittes des unteren Handgriffabdeckung- Mittelabschnittes (54) abdeckt.

## Revendications

1. Motocyclette comprenant :
une partie de tube de tête (21) positionnée transversalement au milieu de la motocyclette ;
un arbre de direction (3) destiné à être inséré dans la partie de tube de tête (21) ;
un guidon (12) destiné à être couplé à l'arbre de direction (3), le guidon (12) incluant une paire de poignées gauche et droite (31, 32) destinées à être tenues par le conducteur de la motocyclette ; et
une partie de couplage (33) couplant les poignées gauche et droite (31, 32) ;
une partie de recouvrement de poignée (13) incluant : une protection de poignée supérieure (41) disposé au-dessus de la partie de couplage (33) ; et une protection de poignée inférieure (42) formée séparément de la protection de poignée supérieure (41), la protection de poignée inférieure (42) étant disposée au-dessous de la partie de couplage (33) et de la protection de poignée supérieure (41) ;
une partie de câble (74) recouverte par la partie de recouvrement de poignée (13) ;
une fourche avant (4) couplée à la partie inférieure de l'arbre de direction (3) ;
une roue avant (5) soutenue par la partie inférieure de la fourche avant (4) ;
une protection avant supérieure (171) disposée en avant de la partie de tube de tête (21), la protection avant supérieure (171) étant disposée au-dessus de la roue avant (5) ;
une partie de phare (26) disposée dans la protection avant supérieure (171) ; et
une protection avant inférieure (172) positionnée au-dessous de la protection avant supérieure (171), la protection avant inférieure (172) étant couplée à la protection avant supérieure (171), la protection avant inférieure (172) étant disposée en arrière de la roue avant (5),
la protection avant supérieure (171) et la protection avant inférieure (172) constituent une cavité (173) en retrait vers l'arrière du côté de la motocyclette, la partie arrière de la roue avant (5) est disposée dans la cavité (173), dans lequel la protection avant supérieure (161) est positionnée plus haut que l'extrémité supérieure (P1) de la cavité (173) sur une vue de face du véhicule et la protection avant inférieure (172) est disposée plus bas que l'extrémité supérieure (P1) de la cavité (173) sur une vue de face du véhicule, une ligne conceptuelle (A1) et une ligne horizontale passant par l'extrémité supérieure (P1) de la cavité (173) sur une vue de face de la motocyclette, dans laquelle la longueur verticale (L1) depuis l'extrémité inférieure de la protection avant inférieure (172) jusqu'à ladite ligne conceptuelle (A1) est plus grande que la longueur verticale (L2) depuis l'extrémité supérieure de la protection avant supérieure (171) jusqu'à ladite ligne conceptuelle (A1),
la protection de poignée inférieure (42) comporte : une partie médiane de protection de poignée inférieure (54) dans laquelle est inséré l'arbre de direction (3) ; et des parties latérales de protection de poignée inférieure (55, 56) s'étendant transversalement vers l'extérieur depuis des positions plus hautes que l'extrémité inférieure (549) de la partie médiane de protection de poignée inférieure (54),
la partie médiane de protection de poignée inférieure (54) comporte un bord inférieur disposé plus bas que l'extrémité supérieure de la protection avant supérieure (171) sur une vue de côté de la motocyclette, la partie de câble (74) s'étend vers le bas par l'intermédiaire de la partie médiane de protection de poignée inférieure (54), **caractérisée en ce que**
la partie médiane de protection de poignée inférieure (54) comporte une ouverture (541, 546 à 548) dans sa partie avant, ou
la longueur verticale (L3) de la partie avant de la partie médiane de protection de poignée inférieure (54) est inférieure à la longueur verticale (L4) d'une partie transversalement médiane de la poignée de protection supérieure (41).

2. Motocyclette selon la revendication 1, **caractérisée en ce que** l'ouverture (541) dans la partie avant de la partie médiane de protection de poignée inférieure (54) s'étend depuis le bord supérieur de la partie avant de la partie médiane de protection de poignée inférieure (54) jusqu'au bord inférieur de la partie médiane de protection de poignée inférieure (54).

3. Motocyclette selon la revendication 1 ou 2, **caractérisée en ce que** la partie de câble (74) est disposée de manière à passer devant l'arbre de direction (3).

4. Motocyclette selon l'une des revendications 1 à 3, **caractérisée en ce que** la partie de protection de poignée (13) comporte en outre une protection de poignée médiane (43) pour recouvrir l'ouverture (541) dans la partie avant de la partie médiane de protection de poignée inférieure (54).

5. Motocyclette selon la revendication 4, **caractérisée en ce que** la protection de poignée médiane (43) recouvre la partie transversalement médiane de la protection de poignée supérieure (41) ainsi que l'ouverture (541) dans la partie avant de la partie médiane de protection de poignée inférieure (54).

6. Motocyclette selon l'une des revendications 1 à 5, **caractérisée en ce que** la partie de câble (74) comporte un câble d'accélérateur destiné à être relié à l'une ou l'autre des poignées droite et gauche (31, 32).

7. Motocyclette selon la revendication 6, **caractérisée en ce que** le câble d'accélérateur est au moins partiellement positionné plus haut que la protection de poignée inférieure (42).

8. Motocyclette selon l'une des revendications 1 à 7, **caractérisé par** une unité de mesurage (34) configurée pour afficher les informations associées à la motocyclette, dans laquelle l'unité de mesurage (34) est fixée au guidon (12).

9. Motocyclette selon la revendication 8, **caractérisé par** une partie de stockage (39) disposée au moins partiellement à l'intérieur de la partie de protection de poignée (13) dans laquelle la partie de mémorisation (39) est fixée à l'unité de mesurage (34).

10. Motocyclette selon l'une des revendications 1 à 9, **caractérisée en ce que** la partie de phare (26) comporte une paire d'unités de phare droit et gauche (262, 261), et
chacune des unités de phare droit et gauche (262, 261) présente une forme inclinée vers le haut et transversalement vers l'extérieur sur une vue de face de la motocyclette.

11. Motocyclette selon l'une des revendications 1 à 10, **caractérisée en ce que** chacune des parties latérales de protection de poignée inférieure comporte une extrémité supérieure positionnée plus haut que la partie de couplage (33) du guidon (12).

12. Motocyclette selon l'une des revendications 1 à 11, **caractérisé par** un commutateur de marche (71 à 73) disposé dans la partie arrière de la partie de protection de poignée (13),
dans lequel la partie de protection de poignée (13) comporte en outre une protection de commutateur (63, 64) destinée à protéger l'environnement du commutateur de marche (71 à 73), et
la protection de commutateur (63, 64) est formée séparément de la protection de poignée supérieure (41) et de la protection de poignée inférieure (42).

13. Motocyclette selon l'une des revendications 1 à 12, **caractérisée en ce que** l'extrémité supérieure de la protection avant supérieure (171) est positionnée plus haut que l'extrémité inférieure de chaque partie latérale de protection de poignée inférieure (55, 56).

14. Motocyclette selon l'une des revendications 1 à 13, **caractérisée en ce que** la limite (A2) entre la protection de poignée supérieure (41) et la protection de poignée inférieure (42) ne se poursuit pas jusqu'au bord inférieur de la partie médiane de protection de poignée inférieure (54).

15. Motocyclette selon l'une des revendications 1 à 14, **caractérisée en ce que** la partie médiane de protection de poignée inférieure (54) comporte une ouverture (550) dans sa partie arrière,
l'ouverture de la partie arrière de la partie médiane de protection de poignée inférieure (54) s'étend depuis le bord supérieur jusqu'au bord inférieur dans la partie arrière de la partie médiane de protection de poignée inférieure (54).

16. Motocyclette selon la revendication 15, **caractérisée en ce que** la partie de protection de poignée (13) comporte en outre un protection de poignée arrière (49) recouvrant l'ouverture (550) de la partie arrière de la partie médiane de protection de poignée inférieure (54).
